# EUROPÄISCHE PATENTANMELDUNG

(11) **EP 1 773 023 A1**
(43) Veröffentlichungstag der Anmeldung: **11.04.2007**
(21) Anmeldenummer: 06020993.9
(22) Anmeldetag: 06.10.2006
(51) Int. Cl.: H04L 29/08

(54) **Verfahren zur Informationsvermittlung zwischen mindestens einem Anbieterendgerät und mindestens einem Nutzerendgerät**

(30) Priorität: 10.10.2005 DE 102005048404; 17.01.2006 DE 102006002148
(71) Anmelder: Raatz, Mirko, 07554 Gera (DE)
(72) Erfinder: Raatz, Mirko, 07554 Gera (DE)
(74) Vertreter: Kruspig, Volkmar

(57) **Zusammenfassung**

Die Erfindung betrifft ein Verfahren zur Daten verarbeitenden Informationsvermittlung zwischen einer Gesamtheit aus mindestens einem Anbieter und einer Gesamtheit aus mindestens einem Nutzer in einem Kommunikationsnetzwerk. Das Verfahren ist durch folgende Verfahrensschritte gekennzeichnet:
- Erstellen mindestens eines Anbieteraccounts mit mindestens einem eindeutigen Anbieterprofil (AP1, AP2, AP3) auf einem zentralen Datenbanksystem (DBS) durch einen ersten Datentransfer zwischen mindestens einem Anbieterendgerät (20) und einem zentralen Datenbankserver (25) innerhalb des Kommunikationsnetzwerks,
- Erstellen mindestens eines Nutzeraccounts mit mindestens einem eindeutigen Nutzerprofil (NP1, NP2) auf dem zentralen Datenbanksystem (DBS) durch einen zweiten Datentransfer zwischen mindestens einem Nutzerendgerät (30) und dem zentralen Datenbankserver innerhalb des Kommunikationsnetzwerks,
- Übertragen mindestens eines anbieterspezifischen Inhalts (C) von dem mindestens einen Anbieterendgerät an den zentralen Datenbankserver,
- Aufbereitung, Selektierung und Kategorisierung des mindestens einen anbieterspezifischen Inhalts (C) auf dem Datenbankserver gemäß veränderbarer Daten des Anbieterprofils,
- Abgleich zwischen den Daten des mindestens einen Anbieterprofils und den Daten des mindestens einen Nutzerprofils anhand individuell gewählter Zuordnungsparameter und nutzerspezifischen Anforderungskriterien und Ermittlung eines Korrelationsgrades,
- Freigabe des mindestens einen anbieterspezifischen Inhalts (C) für das mindestens eine Nutzeraccount mit dem mindestens einen Nutzer bei einem hinreichend großen Korrelationsgrad entsprechend der Zuordnungsparameter und der Anforderungskriterien.

## Beschreibung

Verfahren zur Daten verarbeitenden Informationsvermittlung zwischen einer Gesamtheit aus mindestens einem Anbieterendgerät in bidirektionaler Kommunikation mit einem zentralen Datenbankserver und einer Reihe von Nutzerendgeräten in bidirektionaler Kommunikation mit dem zentralen Datenbankserver in einem Kommunikationsnetzwerk, insbesondere dem Internet und/oder einem Mobilfunknetz nach dem Oberbegriff des Anspruchs 1.

Bei einer möglichst effektiven Vermarktung von Waren und Dienstleistungen kommt es einerseits darauf an, die Angebote eines Anbieters mit einem möglichst minimalen Aufwand einem möglichst großen Kreis potentieller Interessenten bekannt zu machen. Dazu müssen die Waren und Dienstleistungen einerseits beworben und andererseits Mittel und Wege gefunden werden, um die individuellen Bedürfnisse potentieller Kunden mit den Angeboten der Anbieter in gezielter Weise in Übereinstimmung zu bringen. Dies wird durch unterschiedliche Mittel der Werbung oder der Vermittlung von Kontakten zwischen Anbieter und Kunde erreicht.

So werden beispielsweise durch die Anbieter gedruckte Kataloge, Prospekte, Faltblätter oder dergleichen Informationsmaterialien an potentielle Kunden entweder auf Anforderung oder ohne Anforderung versandt oder unter Nutzung diverser Kommunikationsmedien, beispielsweise des Internets, elektronisch übermittelt. Diese tendenziell wachsende Flut von Werbemitteln blockiert Briefkästen, wird daher als vorwiegend lästig empfunden, vielfach ungelesen weggeworfen und daher kaum zur Kenntnis genommen. Elektronischen Werbemitteln, die per Email ohne Zielgruppenplanung versandt werden, ergeht es nicht besser. Sie gehen mehr oder weniger in einer ständig wachsenden Flut unerwünschter, Speicherplatz und Übertragungskapazitäten blockierender Emails, dem so genannten Spam, unter.

Eine derartige Werbung "ins Blaue hinein" ist demnach nicht sehr effektiv und wird durch diverse Verfahren der Informationsvermittlung oder der Kundeninformation ergänzt. Hierbei abonniert zum Beispiel ein Kunde eine regelmäßige Publikation eines Anbieters, die ihm entweder als regelmäßige Postsendung oder als Newsletter per Email zugesendet wird und ihn über die neuesten Angebote informiert. Der Kunde erhält dann die Möglichkeit, aus diesen Angeboten auszuwählen und sie in Anspruch zu nehmen. Diese Möglichkeit der Informationsvermittlung lässt sich insbesondere durch die ständig wachsenden Möglichkeiten des Internets mit modernen Verfahren für online-Bestellungen oder diverse andere Verfahren des so genannten "e-Commerce" verbinden.

Diese eigentlich recht nützliche Vorgehensweise wird spätestens dann unwirksam, wenn der Kunde aus einer Vielzahl möglicher Anbieter auswählen und daher alle Angebote der Anbieter prüfen muss. In diesem Fall sucht er beispielsweise die diversen Angebote der Anbieter heraus, indem er sich eine Reihe von Informationsmaterial per Post schicken lässt, alle ihm bekannten Webseiten der Anbieter aufsucht, sich deren Informationsmails oder Newsletter zusenden lässt und aufgrund der ihm nun vorliegenden Informationsmenge auswählt. Bei einer ständig wachsenden Menge von Anbietern steht der potentielle Kunde schließlich wieder vor dem Problem, den für ihn passenden Anbieter für die gesuchte Ware oder Dienstleistung zu finden, den Überblick über die Informationsmenge zu behalten und die Angebote angemessen zu prüfen. Der Aufwand, der zur Suche möglicher Anbieter, zur Verwaltung der Angebote der Anbieter und zur Beurteilung der zugesendeten Angebote für Waren und Dienstleitungen erbracht werden muss, ist sowohl in technischer Hinsicht, zum Beispiel durch Bereitstellung eines entsprechenden Speicherplatzes oder einer gewissen Übertragungskapazität, als auch in einer rein psychologischen Hinsicht beträchtlich. Das Verfahren der elektronischen oder nichtelektronischen Newsletter oder Mailinglisten gerät dann sehr schnell an eine nicht mehr zu überwindende Grenze, bei der einem ständig wachsenden Aufwand und einer ständig wachsenden Informationsflut eine relativ dazu sinkende Rezeptionskapazität entgegensteht. Mit anderen Worten: Viele der Mailinglisten, Newsletter oder auch versendeten Druckerzeugnisse und Prospekte werden unter diesen Bedingungen vollkommen umsonst erstellt, gedruckt, vertrieben und gespeichert, während der Kunde wiederum zunehmend seltener genau das findet, was er sucht.

Es besteht somit die der Erfindung zugrunde liegende Aufgabe, ein Verfahren zur Daten verarbeitenden Informationsvermittlung zwischen einer Gesamtheit aus mindestens einem Anbieter und einer Gesamtheit aus mindestens einem Nutzer anzugeben, das die vorhergehend erwähnten Nachteile konventioneller Newsletter- und Mailingverfahren nachhaltig überwindet und eine einfache, transparente, überschaubare und damit effektive Informationsvermittlung zwischen Anbieter und möglichem Kunden, d.h. Nutzer ermöglicht. Das gesuchte Verfahren soll den damit verbundenen Datenverkehr möglichst minimieren, sowohl von dem mindestens einen Anbieter als auch dem mindestens einen Nutzer leicht erfassbar und ausführbar sein und sowohl dem Anbieter als auch dem Nutzer Mittel sowohl zu einer gezielten Informationsbereitstellung, als auch zu einer gezielten Informationsauswahl bereitstellen.

Diese Aufgabe wird mit einem Verfahren zur Daten verarbeitenden Informationsvermittlung mit den Merkmalen des Anspruchs 1 gelöst, wobei die nachfolgenden Unteransprüche zweckmäßige bzw. vorteilhafte Ausführungsformen und Erweiterungen des Verfahrens beinhalten.

Das Verfahren ist erfindungsgemäß durch folgende Verfahrensschritte gekennzeichnet:

Es wird mindestens ein Anbieteraccount mit mindestens einem eindeutigen Anbieterprofil auf einem zentralen Datenbanksystem erzeugt. Dies geschieht durch einen ersten Datentransfer zwischen mindestens einem Anbieterendgerät und einem zentralen Datenbankserver innerhalb eines Kommunikationsnetzwerkes. Weiterhin wird mindestens ein Nutzeraccount mit mindestens einem eindeutigen Nutzerprofil auf dem zentralen Datenbanksystem erzeugt. Dies erfolgt durch einen zweiten Datentransfer zwischen mindestens einem Nutzerendgerät und dem zentralen Datenbankserver innerhalb des Kommunikationsnetzwerks. Mindestens ein anbieterspezifisches Inhalt wird von dem mindestens einen Anbieterendgerät an den zentralen Datenbankserver übertragen. Dieser mindestens eine anbieterspezifische Inhalt wird aufbereitet, selektiert und kategorisiert gemäß veränderbarer Daten des Anbieterprofils. Es wird weiterhin ein Abgleich zwischen den Daten des mindestens einen Anbieterprofils und den Daten des mindestens einen Nutzerprofils anhand individuell gewählter Zuordnungsparameter und nutzerspezifischen Anforderungskriterien ausgeführt und ein Korrelationsgrad ermittelt. Schließlich erfolgt eine Freigabe des mindestens einen anbieterspezifischen Inhalts für das mindestens eine Nutzeraccount mit dem mindestens einen Nutzer bei einem hinreichend großen Korrelationsgrad entsprechend der Zuordnungsparameter und der Anforderungskriterien.

Das erfindungsgemäße Verfahren geht also von dem Grundgedanken aus, die von mindestens einem Anbieter bereitgestellten Informationen gezielt an mindestens einen Nutzer zu vermitteln. Dabei wird zunächst mindestens ein Anbieterprofil erstellt. Dieses Anbieterprofil ist mit einem Anbieteraccount auf einem zentralen Datenbankserver verknüpft. Es enthält alle wesentlichen Informationen über den Anbieter, bzw. Informationen, die den Anbieter eindeutig identifizieren. Weiterhin wird mindestens ein Nutzerprofil erstellt. Das Nutzerprofil ist mit einem Nutzeraccount auf dem zentralen Datenbankserver verknüpft. Sowohl das Nutzerprofil, als auch das Anbieterprofil werden in einem Datenbanksystem verwaltet, das auf dem Datenbankserver ausgeführt wird. Der mindestens eine Anbieter stellt nun durch ihn erstellte Inhalte auf dem Datenbankserver ein. Der eingestellte Inhalt wird entsprechend den Angaben des Anbieterprofils auf dem Datenbanksystem aufbereitet, d.h. selektiert und kategorisiert und liegt somit in einer definierten und geordneten Form auf dem Datenbankserver bereit. Der Inhalt wird für den Nutzeraccount freigegeben, dessen Nutzerprofil eine hinreichende Übereinstimmung oder Korrelation zum Anbieterprofil des Inhalts aufweist. Auf diese Weise erhält der Nutzer des Nutzeraccounts genau den Inhalt der auf seine Erfordernisse zutreffenden Anbieter, während jeder Anbieter genau solche Inhalte an diejenigen Nutzer übermitteln kann, die er damit erreichen und informieren will. Der ungeregelte, unübersichtliche und umfangreiche Datentransfer zwischen einer Gesamtheit von Anbietern einerseits und einer Gesamtheit von Nutzern andererseits wird zugunsten einer gezielten Vermittlung zwischen Anbieter und Nutzer aufgrund spezifischer, individueller Daten und Profile nachhaltig minimiert. Zugleich ermöglicht dieses Verfahren sowohl dem Anbieter als auch dem Nutzer einen Überblick sowohl über die tatsächliche Reichweite und Wirksamkeit der bereitgestellten Informationen, als auch über ein verfügbares Informationsangebot und trägt somit entscheidend dazu bei, die Beziehungen zwischen den Anbietern und Nutzern transparent zu gestalten.

Zweckmäßigerweise enthält das mindestens eine Anbieterprofil mindestens Daten über einen geographischen Ort oder Ortsbereich des Anbieters, eine kategoriale Zuordnung des durch den Anbieter übertragenen Inhalts, personenbezogene Daten des Anbieters und statistische Daten über den mindestens einen anbieterspezifische Inhalt. Diese Daten kennzeichnen den Anbieter eindeutig.

Entsprechend enthält das Nutzerprofil zweckmäßigerweise Daten über einen geographischen Ort oder Ortsbereich des Nutzers, eine kategoriale Zuordnung des durch den Nutzer angeforderten klassifizierten Inhalts, personenbezogene Daten des Nutzers und statistische Daten über den mindestens einen für den Nutzer freigegebenen anbieterspezifischen Inhalt.

Dadurch ist es beispielsweise für jeden Nutzer möglich, Anbieter auszuwählen, die einem bestimmten Ort oder Ortsbereich angehören, während der Anbieter die Orte oder Ortsbereiche der Nutzer ermitteln kann, die den Inhalt abgerufen haben. Schließlich lassen sich Anbieter auswählen, die entsprechend der kategorialen Zuordnungen beispielsweise verschiedenen Branchen angehören, während jeder Anbieter aus der Auswertung der Nutzerprofildaten entnehmen kann, welche Kategorien von Nutzern sich für die Inhalte des Anbieters interessieren.

Das mindestens eine Anbieterprofil und das mindestens eine Nutzerprofil wird in Form einer relationalen Datenbankstruktur, insbesondere einer SQL-Datenbankstruktur, auf dem zentralen Datenbankserver gespeichert und verarbeitet. Derartige Datenbankstrukturen erweisen sich für umfangreiche und komplexe Zuordnungen als besonders zweckmäßig und stellen dafür eine umfangreiche Menge an Tools bereit.

Das Übertragen des mindestens einen anbieterspezifischen Inhalts auf die Datenbankstruktur des zentralen Datenbankservers und/oder das Freigeben des anbieterspezifischen Inhalts erfolgt über eine XML-Schnittstelle. XML ermöglicht das Einbinden und Verarbeiten einer Reihe von zum Teil sehr unterschiedlichen Datentypen wie Text-, Bild- oder auch Tondaten.

Die Freigabe des mindestens einen anbieterspezifischen Inhalts für das mindestens eine Nutzeraccount erfolgt in Form einer von dem zentralen Datenbankserver an das Nutzerendgerät übertragenen Freigabeinformation, insbesondere in Form einer über Email übermittelten Linkliste. Dies hat den Vorteil, dass nicht jeder Inhalt in jedem Fall an das Nutzerendgerät übertragen werden muss, sondern bei Bedarf vom Nutzer abgerufen werden kann. Dadurch wird der Datenverkehr auf ein notwendiges Minimum beschränkt.

Die Freigabe des mindestens einen anbieterspezifischen Contents für das mindestens eine Nutzeaccount erfolgt bei einer weiteren Ausführungsform in Form einer von dem zentralen Datenbankserver an das Nutzerendgerät übertragenen Freigabeinformation in Form einer Mobilfunk-Kurznachricht (SMS) mit einer Freigabeinformation. Bei dieser Ausführungsform wird somit auf einen Übertragungskanal in einem Mobilfunksystem zurückgegriffen.

Bei einem Aufruf des Anbieterprofils sind zweckmäßigerweise statistische Daten über die Menge der freigegebenen anbieterspezifischen Inhalte abrufbar. Diese statistischen Daten lassen sich in einer sehr einfachen Weise in Verbindung mit der Übermittlung der Freigabeinformation oder dem tatsächlichen Abruf des Inhalts durch Datenbankoperationen erfassen und bilden eine Rückmeldung über die Wirksamkeit oder das Interesse am Inhalt für den Anbieter.

Das Abrufen der statistischen Daten des Anbieterprofils ist bei einer zweckmäßigen Ausführungsform mittels einer Visualisierung ausführbar, wobei eine Darstellung aller geographischen Orte oder Ortsbereiche aller die Inhalte anfordernden Nutzer gemäß deren Nutzerprofile in Form einer generierten Kartendarstellung erfolgt. Der Anbieter sieht dabei in einer eindeutigen und leicht zu erfassenden Anzeige den Einzugs- und Wirkungsbereich seiner Angebote.

Weiterhin ist das Abrufen der statistischen Daten des Anbieterprofils auf Anforderung durch eine Visualisierung ausführbar, wobei eine laufende Zählung über die Freigaben der vorhandenen anbieterspezifischen Inhalte mit einer Auflistung und/oder einer graphischen Darstellung der gezählten Freigaben ausgeführt wird. Der Anbieter hat dabei die Möglichkeit, zum

Beispiel die zeitliche Entwicklung zu verfolgen, in der die Inhalte abgerufen oder angefordert werden. Dabei können saisonale Überblicke gewonnen werden.

Der Zugriff auf das mindestens eine Anbieterprofil bzw. das mindestens eine Nutzerprofil ist durch eine Accountverwaltung sicherheitswirksam, insbesondere durch eine anfängliche Verifizierung in Verbindung mit einer Passworteinrichtung und Passworterkennung geschützt. Dadurch kann das Anbieter- wie auch das Nutzerprofil nur von dadurch autorisierten Personen verändert bzw. eingesehen werden.

Zur Auswahl und/oder Veränderung der Daten des mindestens einen Anbieterprofils bzw. des mindestens einen Nutzerprofils sind bei einer vorteilhaften Ausbildung der Erfindung Mittel für eine graphische Selektion aus einer Menge möglicher Anbieter- und/oder Nutzerdaten aktivierbar. Hierbei handelt es sich insbesondere um anklickbare topographische Karten und/oder Auswahlmenüs zur Auswahl eines geographischen Ortes oder Ortsbereichs und/oder Auswahllisten. Dadurch wird das Eingeben und Verändern der Daten des Anbieter- bzw. Nutzerprofils nachhaltig vereinfacht und kann präzise erfolgen.

Das mindestens eine Anbieterendgerät und das mindestens eine Nutzerendgerät sind ein internettaugliches Endgerät und das Kommunikationsnetzwerk ist das Internet mit den bekannten Übertragungsstandards und Protokollen.

Die Inhalte umfassen Bild-, Text- und/oder Multimediadaten, insbesondere Bild-, Dokumenten-, Präsentations-, Ton- und/oder Videodatenformate.

Das erfindungsgemäße Verfahren soll anschließend anhand von Ausführungsbeispielen näher erläutert werden. Zur Verdeutlichung dienen die Figuren 1 bis 23. Es werden für gleiche oder gleichwertige Verfahrensschritte die selben Bezugszeichen verwendet.

Es zeigt:
- Fig. 1: eine beispielhafte Übersichtsdarstellung über eine verwendete Systemarchitektur zum Ausführen des Verfahrens,
- Fig. 2: eine beispielhafte Baumstruktur für den Aufruf von Navigationsseiten für den Nutzer bzw. den Anbieter,
- Fig. 3: eine beispielhafte relationale Datenbankstruktur zum Ausführen des Verfahrens,
- Fig. 4: eine beispielhafte Portalseite,
- Fig. 5: eine beispielhafte Startseite für einen Anbieterzugang,
- Fig. 6: eine beispielhafte Login-Seite für einen Anbieterzugang,
- Fig. 7: eine beispielhafte Verwaltungsseite für einen Anbieterzugang,
- Fig. 8: eine beispielhafte Seite zum Eintragen und Verändern eines Anbieterprofils,
- Fig. 9: eine beispielhafte Seite zum Ausführen und Verwalten von Inhaltuploads,
- Fig. 10: eine beispielhafte Seite zum Abrufen einer Statistik über Inhaltverbreitungen,
- Fig. 11: eine weitere beispielhafte Statistikseite mit numerischen Daten,
- Fig. 12: eine weitere beispielhafte Statistikseite mit in Form einer Graphik visualisierten Abrufdaten über Inhalte,
- Fig. 13: eine weitere beispielhafte Statistikseite mit in Form einer Kartendarstellung visualisierten Abrufdaten über Inhalte,
- Fig. 14: eine beispielhafte Startseite für einen Nutzerzugang,
- Fig. 15: eine beispielhafte Login-Seite für einen Nutzerzugang,
- Fig. 16: eine beispielhafte Seite zum Ändern von Nutzerdaten,
- Fig. 17: eine weitere beispielhafte Seite zum Ändern von Nutzerdaten,
- Fig. 18: eine beispielhafte Seite zum Auswählen von Branchen, Ortsbereichen und Orten,
- Fig. 18a: eine weitere beispielhafte Seite zum Auswählen von Artikelstichworten, Ortsbereichen und Orten,
- Fig. 19: eine beispielhafte Seite für eine Artikel-, Branche- und Ortssuche,
- Fig. 20: eine beispielhafte Seite für eine graphische Ortsbereichswahl mittels einer interaktiven Karte,
- Fig. 21: eine weitere beispielhafte Seite für eine Artikel-, Branche- und Ortssuche mit einer Ergebnisdarstellung,
- Fig. 22: beispielhafte Seiten zum Zusammenstellen eines virtuellen Einkaufszettels,
- Fig. 22a: eine weitere beispielhafte artikelbezogene Seite zum Zusammenstellen eines virtuellen Einkaufszettels,
- Fig. 23: eine beispielhafte Darstellung einer an den Nutzer übermittelten Email,
- Fig. 24: eine weitere beispielhafte Darstellung einer an den Nutzer übermittelten Email.

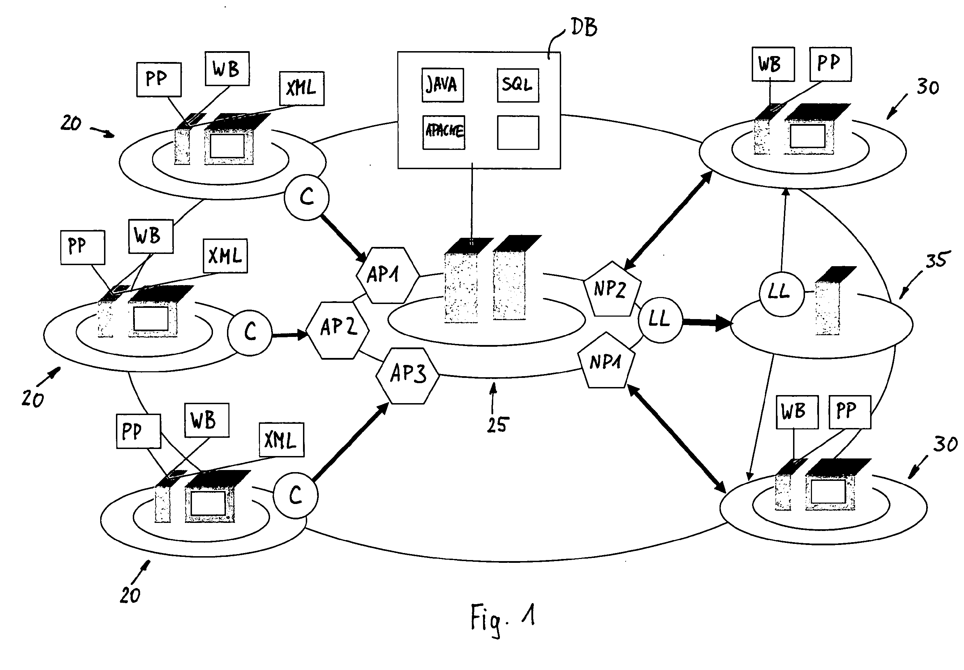

Fig. 1 zeigt eine beispielhafte Systemarchitektur zum Ausführen des Verfahrens. Eine Reihe von Anbieterendgeräten 20, die insbesondere in Form von Personalcomputern oder Workstations ausgebildet sind, kommunizieren mit einem zentralen Datenbankserver 25 bidirektional. Eine Reihe von Nutzerendgeräten 30, die ebenfalls als Personalcomputer oder Workstations ausgebildet sein können, führen ebenfalls eine bidirektionale Kommunikation mit dem zentralen Datenbankserver 25 aus. Weiterhin ist ein Email-Server 35 vorhanden, der mindestens für eines der Nutzerendgeräte den Versand von Emails zwischen dem zentralen Datenbankserver 25 und dem entsprechenden Nutzerendgerät ausführt. Der Email-Server 35 kann insbesondere als kombinierter POP/SMTP-Server ausgebildet sein, der nutzerspezifische Email-Konten verwaltet.

Der Datenbankserver 25 weist ein Datenbanksystem in Form einer relationalen Datenbank DB auf, die beispielsweise als eine MySQL-, Oracle- oder DB2-Datenbank ausgebildet sein kann. Für den Zugriff auf die in der Datenbank gespeicherten Daten und die Realisierung der für die Kommunikation zwischen der Gesamtheit der Anbieterendgeräte 20 und der Gesamtheit der Nutzerendgeräte 30 sowie der Verarbeitung der innerhalb der Datenbank DB gespeicherten Daten, zum Beispiel zur Generierung vom Emails oder für alle notwendigen Datenverarbeitungsschritte wird auf Programme zurückgegriffen, die beispielsweise in der plattformunabhängigen Programmiersprache JAVA ausgeführt sind. Zur Umsetzung der JAVA-basierten Verwaltungsprogramme in eine für einen Webbrowser lesbare Nutzeroberfläche für die Anbieter- und Nutzerendgeräte ist ein so genannter TOMCAT vorhanden, der eine Reihe von HTML-codierten Webseiten erzeugt. Diese werden auf einem UNIX- oder LINUX-basierten Server beispielsweise mittels der Webserverapplikation Apache verwaltet. Die Kommunikation zwischen den Anbieterendgeräten und den Nutzerendgeräten bzw. die Gestaltung einer für den Anbieter bzw. den Benutzer einfach zu bedienenden Oberfläche erfolgt unter der Verwendung einschlägig bekannter Webbrowser, beispielsweise des Internet-Explorers von Microsoft, Opera, Mozilla bzw. den davon abgeleiteten oder mit diesen vergleichbaren Applikationen. Als grundlegendes Kommunikationsprotokoll zwischen dem zentralen Datenbankserver 25 und den Anbieter- bzw. Nutzerendgeräten 20 bzw. 30 sowie zwischen dem Email-Server 35 und den Endgeräten 30 bzw. dem zentralen Datenbankserver 25 werden die gängigen Internetprotokolle wie TCP/IP und vergleichbare Protokolle verwendet. Das Kommunikationsnetzwerk ist demzufolge vorzugsweise das Internet 36.

Neben dem Internet können auch andere Kommunikationsnetzwerke für den Ablauf der nachfolgend beschriebenen Verfahrensschritte einbezogen sein. So können beispielsweise eine Reihe von Daten über ein Mobilfunknetz, insbesondere ein GSM- oder UMTS-Netz zwischen den Nutzer-Endgeräten, den Endgeräten der Anbieter einerseits und dem Datenbankserver andererseits ausgetauscht werden. Hierzu werden vor allem Kurznachrichten, insbesondere SMS und/oder MMS ausgetauscht.

Das Mobilfunknetz kann auch für den Austausch von Daten und Informationen genutzt werden, die unter Verwendung eines WAP-Protokolls ausgetauscht werden. Prinzipiell können damit alle nachfolgend beschriebenen Dialoge und Elemente einer Benutzeroberfläche auf einem dafür ausgelegten Endgerät, d.h. einem Mobiltelefon, einem Organizer und dergleichen handheld-Endgerät angezeigt und ausgeführt werden.

Die Anbieterendgeräte 20 enthalten mindestens Programmroutinen, Programme oder Programmpakete zum Erstellen oder mindestens zum Anzeigen von Präsentationen PP, beispielsweise Graphik-, Text-, Bildverarbeitungsprogramme sowie eine Programmschnittstelle zum Umwandeln eigener dabei erzeugter Inhalte in ein XML-Format. Weiterhin weist jedes der Anbieterendgeräte 20 einen Webbrowser WB auf. Die Programmkomponenten PP erzeugen anbieterspezifische Präsentationen, beispielsweise Angebotslisten, Prospekte, Graphiken und dergleichen, die über die XML-Schnittstelle in ein einheitliches plattformübergreifendes Format überführt werden. Moderne Programmpakete, wie beispielsweise Microsoft Office, enthalten standardmäßig eine XML-Schnittstelle und ermöglichen einen unkomplizierten XML-Export. Der Webbrowser WB schließlich dient zur Anzeige einer Webseite des zentralen Internetservers, der mit dem Datenbankserver 25 kombiniert ist, und dient somit zur Generierung einer Nutzeroberfläche für den Anbieter. Der Internetserver stellt dazu die notwendigen Komponenten zum Betreiben einer Internetseite, beispielsweise Bilder, HTML-Dateien oder JAVA-Quellcode, bereit. Anbieter- oder auf den Nutzer bezogene Daten, bzw. Artikeldaten, d.h. die zu vermittelnden Inhalte, werden dagegen aus der Datenbank bezogen, die physikalisch auf dem selben Serversystem wie der Internetserver lokalisiert sein kann. Im Folgenden kann ohne Beschränkung der Allgemeinheit und aus Gründen einer einfachen Darstellung davon ausgegangen werden, dass Datenbankserver und Internetserver auf einem Serversystem lokalisiert sind.

Das durch den Anbieter erzeugte XML-Dokument bildet einen Inhalt C, der an den zentralen Datenbankserver 25 übertragen und dort in der Datenbankstruktur DB gespeichert, verwaltet und verarbeitet wird. Dazu sind an dem zentralen Datenbankserver 25 eine Reihe von personalisierten Anbieteraccounts eingerichtet, mit denen eine Reihe von Anbieterprofilen AP1, AP2 und AP3 verwaltet werden. Die Inhalte C, d.h. in diesem beispielhaften Fall die XML-Dokumente, werden entsprechend der Struktur der Anbieterprofile AP1, AP2, AP3 selektiert und logisch strukturiert in die Datenbank eingefügt und verarbeitet. Die Struktur der Anbieteraccounts setzt eine Reihe von Zugriffsberechtigungen für die einzelnen Anbieter und ermöglicht eine personalisierte Verwaltung der Inhalte C für jedes Anbieterprofil, insbesondere Herauf- und Herunterladen der Inhalte oder auch das Editieren des entsprechenden Anbieterprofils.

Auf der Nutzerseite verfügen die Nutzerendgeräte mindestens über einen Webbrowser WB zur Anzeige der Bedienoberfläche der zentralen Datenbank und ein Programm zum Abrufen von Emails von dem Email-Server 35. Der zentrale Datenbankserver stellt eine Reihe von Nutzeraccounts zur Verfügung, über die von den einzelnen Nutzerendgeräten eine Reihe von Nutzerprofilen NP1 und NP2 eingerichtet, editiert und bearbeitet werden können. Die Nutzeraccounts und Nutzerprofile ermöglichen es den einzelnen Nutzern, in gezielter Weise einen entsprechenden Inhalt C anzufordern, auszuwählen und abzurufen. Dabei werden über die Nutzerprofile eine Reihe von Such- und Auswahlkriterien definiert und in der zentralen Datenbank DB verarbeitet. Im Ergebnis wird durch die zentrale Datenbank dem entsprechenden Nutzeraccount eine Freigabeinformation übermittelt, die über den Email-Server 35 an das jeweilige Nutzerendgerät übermittelt wird. Zweckmäßigerweise erfolgt hierbei die Übertragung einer Linkliste LL per Email von dem zentralen Datenbankserver 25 an den Email-Server 35 mit einem Abruf der Email an einem der Nutzerendgeräte 30. Der jeweilige Nutzer kann nun die Linkliste einsehen und durch Aufrufen eines der Links den durch einen der Anbieter erzeugten Inhalt C abrufen. Dabei ist es natürlich auch möglich, dass dem Nutzer über die per Email versendete Linkliste nur eine begrenzte Auswahl aus den ermittelten Inhalten präsentiert wird, während bei einem direkten Aufrufen des Nutzeraccounts sämtliche Inhalte verfügbar gemacht werden. Dadurch kann die Größe der versendeten Email auf ein vertretbares und für den Nutzer übersichtliches Maß beschränkt bleiben.

Das Versenden der Linkliste kann auch über ein GSM- bzw. UMTS-Netz oder jedes andere beliebige Mobilfunknetz erfolgen. Dafür bietet sich das für derartige Netze gebräuchlich Kurznachrichten-Format für SMS oder MMS an. Die gesendete Kurznachricht enthält die Linkliste in Textform, die der Empfänger schließlich in seinen Computer per Hand eingibt.

Komfortabler ist eine über das Mobilfunknetz versendete WAP-Nachricht. Die Nachricht im WAP-Format listet die Linkliste entsprechend einer Webseite im WAP-Format auf, die direkt vom mobilen Endgerät, insbesondere einem Mobiltelefon oder einem Organizer bzw. einem entsprechenden Gerät mir vergleichbaren Funktionseigenschaften angezeigt und als Webseite behandelt werden kann. In Verbindung damit werden natürlich die dadurch aufgerufenen Informationen ebenfalls im WAP-Format dargestellt.

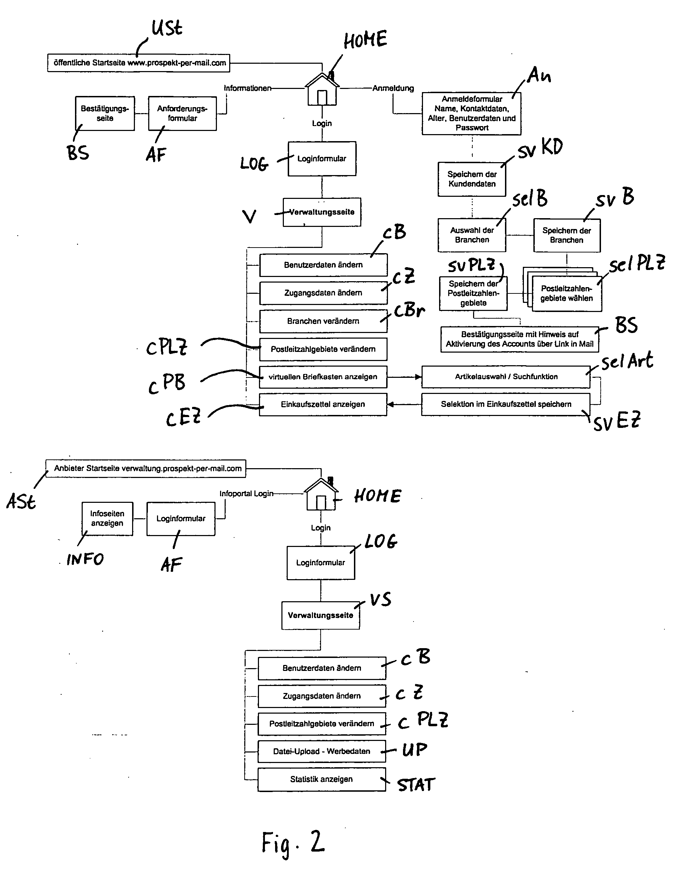

Die im Zusammenhang mit Fig. 1 allgemein dargestellten Funktionsabläufe des Verfahrens werden im folgenden näher erläutert. Fig. 2 zeigt eine beispielhafte Baumstruktur zum Aufruf verschiedener, durch den Datenbankserver erzeugter Webseiten, mit denen Anbieter und Nutzer auf die Funktionen der Datenbank DB zugreifen können. Die Webseiten sind als konventionelle HTMLprogrammierte Seiten ausgeführt, in die JAVA-Komponenten eingebettet sind, die eine Reihe von Eingabemasken, Eingabefenstern, Popup-Fenster, interaktive graphische Elemente und dergleichen Ein- und Ausgabemittel erzeugen. Es wird also eine graphische Benutzeroberfläche und ein Webbrowser auf den Endgeräten des Anbieters und des Nutzers vorausgesetzt.

Als erstes soll die Baumstruktur der Webseiten für den Benutzer dargestellt werden. Bei den nachfolgenden Ausführungsbeispielen sollen Inhalte unterschiedlicher Anbieter aus unterschiedlichen Geschäftsbereichen oder Branchen mit unterschiedlichen Orten oder Ortsbereichen an eine Reihe von Nutzern mit unterschiedlichen Nutzerprofilen mit unterschiedlichen Orten oder Ortsbereichen vermittelt werden.

Benutzer und Anbieter rufen die Funktionen des Datenbankservers über ein gemeinsames Portal auf. Dies geschieht durch die Eingabe einer URL am jeweiligen Webbrowser des jeweiligen Endgerätes. Der Nutzer ruft nun eine allgemein zugängliche Startseite USt auf, die auf eine HOME-Seite führt. Die HOME-Seite führt auf eine Informationsseite mit einem Anforderungsformular AF zum Einrichten eines neuen Nutzeraccounts und einer Bestätigungsseite BS. Mit diesem Anforderungsformular kann ein Anbieter, der Interesse an einer Teilnahme an dem Dienst hat, unabhängig von der Accounteinrichtung auch Informationen über den Dienst anfordern. Weiterhin ist eine Anmeldeseite für eine online-Einrichtung eines neuen Nutzeraccounts mit einem neuen Nutzerprofil vorgesehen. Hierzu wird ein Anmeldeformular An aufgerufen, das von dem Nutzer eine Namenseingabe, die Eingabe von Kontaktdaten, allgemeiner Benutzerdaten, wie z.B. Alter und Wohnort und die Vorgabe eines Passwortes abfragt. Am Ende der Anmeldung folgt eine Anzeige SvKD über das Speichern der eingegebenen Nutzerdaten. Es folgt eine Auswahlseite selB über eine Branchenauswahl. Auf einer Bestätigungsseite svB wird das Speichern der gewählten Branchen angezeigt. Über eine Selektion einer Postleitzahl oder eines Postleitzahlbereiches selPLZ kann der Nutzer Postleitzahlgebiete, d.h. Ortsbereiche, festlegen, in denen er sich selbst befindet bzw. aus denen er Informationen von möglichen Anbietern abfordert. Die getroffene Auswahl wird mit einer Seite svPLZ bestätigt und daraufhin gespeichert. Dem Nutzer wird nun die Neueinrichtung seines Accounts mittels einer Bestätigungsseite BS angezeigt und er erhält zeitgleich dazu eine Bestätigungsmail an seine Email-Adresse. Die Bestätigungsmail enthält zweckmäßigerweise einen Link für die Aktivierung dieses neuen Accounts sowie einen Link zum Löschen des Accounts. Damit wird einem Missbrauch vorgebeugt, sodass nur derjenige Nutzer den Account aktiviert, der dieser Anmeldung explizit zustimmt.

Ein reguläres Anmelden auf einem bereits bestehenden Nutzeraccount führt über ein Loginformular LOG, das eine Reihe von Eingabemasken enthält, zu einer Verwaltungsseite V, von der sich eine Reihe von Seiten zum Ändern der Nutzerdaten cB, der Zugangsdaten cZ, insbesondere des Passworts, der Änderung der gewählten Branchen cBr, der Postleitzahlgebiete und Ortsbereiche cPLZ, zum Aufrufen eines virtuellen Briefkastens oder internen Informationssystems sPB oder zur Anzeige sEZ eines durch den Nutzer zusammengestellten "Einkaufszettels", d.h. einer durch ihn zusammengefassten listenartigen Menge von Inhalten aufrufen lassen. Das Aufrufen des virtuellen Briefkastens sPB führt auf eine Seite selArt für eine Artikelauswahl oder Suchfunktion mit einer daraufhin aktivierbaren Seite zum Abspeichern der selektierten Inhalte im listenartigen "Einkaufszettel". Dieser kann wie erwähnt jederzeit über die Seite sEZ geöffnet werden.

Für den Anbieter sind folgende beispielhafte Seiten aufrufbar. Eine Anbieterstartseite Ast führt auf eine HOME-Seite, von dem entweder eine Infoseite INFO mit einem Anforderungsformular AF oder ein Loginformular LOG aufgerufen werden kann. Das Anforderungsformular ermöglicht es einem Anbieter, sich selbständig ein Anbieteraccount zu erstellen. Das Loginformular LOG dient der Identifizierung des Anbieters auf seinem Account bzw. einem administrierenden Zugang zum Pflegen des Anbieteraccounts durch einen Administrator des Datenbanksystems. Zusammengefasst bekommt der Anbieter über das Anforderungsformular Informationen über das Portal. Die Zugangsdaten berechtigen den Anbieter dazu, seinen Account selbst zu verwalten.

Über das Loginformular wird eine Verwaltungsseite VS aufgerufen. Diese stellt Mittel zum Aufrufen einer Seite cB zum Ändern von Anbieterdaten, eine Seite cZ zum Ändern von Zugangsdaten, eine Seite cPLZ zum Ändern von Postleitzahlgebieten und vor allem eine Seite UP zum Ausführen eines Uploads für ein vom Anbieter erstelltes Inhalt zur Verfügung. Des Weiteren dient eine Statistikseite STAT dazu, Informationen über den Zugriff auf gespeicherte Inhalts abzurufen.

Die Seiten werden vorzugsweise sämtlich durch einen HTML-Code erzeugt und als Webseiten mittels der gebräuchlichen Webbrowser angezeigt. Für eine Darstellung der Seiten auf einem Display eines Mobiltelefons oder Organizers wird in entsprechender Weise auf einen WML-Code zurückgegriffen, um eine Darstellung über das WAP-Protokoll zu ermöglichen. Sowohl der HTML- als auch der WML-Code werden somit auf dem Webserver bereit gehalten. Zur Eingabe bzw. zum Editieren der Daten bzw. für gewisse Designelemente oder das Look and Feel der Seiten dienen JAVA-Plugins oder Scripte oder andere vergleichbare Programmiersprachen und -strukturen.

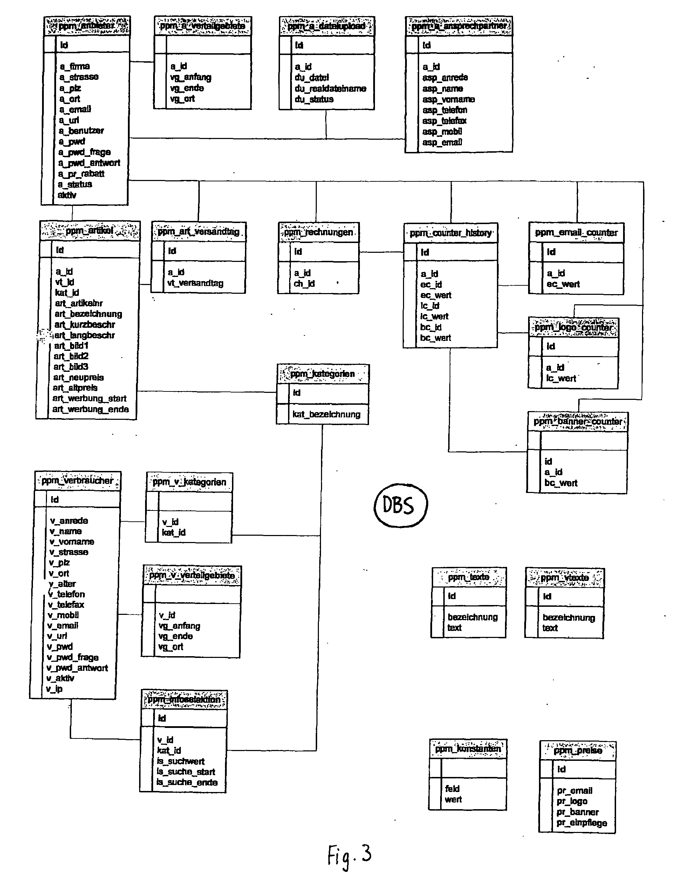

Fig. 3 zeigt eine beispielhafte Datenbankstruktur DBS, die auf dem Datenbankserver 25 realisiert ist. Die Datenbankstruktur kann durch sämtliche dafür vorgesehene Softwarepakete, beispielsweise MySQL, Oracle oder DB3 (eingetragene Warenzeichen), erstellt und verwaltet werden. Sie gliedert sich im wesentlichen in drei Gruppen, die wiederum einzelne aufeinander bezogene Felder enthalten. Die erste Gruppe umfasst anbieterbezogene Variablen und Daten, die zweite Gruppe betrifft Daten des Nutzers, während die dritte Gruppe administrative Variablen enthält. Jede der Gruppe umfasst mehrere Felder.

Ein erstes wichtiges Feld ist in Fig. 3 mit ppm_anbieter bezeichnet. Es enthält alle anbieterspezifischen Personen- oder Zugangsdaten, beispielsweise in Form der Variablen a_firma, a_strasse, a_plz, a_ort usw. Weiterhin sind Variablen für ein Passwort, wie beispielsweise a_pwd, aber auch a_pwd_frage und a_pwd_antwort für eine durch den Anbieter persönlich formulierte Zugangsabfrage bzw. Zugangsantwort vorgesehen. Ein zweites Feld ppm_a_verteilgebiete legt mittels der Variablen a_id, vg_anfang, vg_ende und vg_ort das durch den Anbieter gewünschte Gebiet fest, in dem dessen Angebote bzw. Inhalts für die Nutzer verfügbar sein sollen. Der Anbieter kann damit selektiv bestimmen, auf welchen Ort oder Ortsbereich seine Inhalts zu konzentrieren sind. Ein Feld ppm_a_dateiupload enthält Variablen über eine Kurz- oder Labelbezeichnung einer Datei du_datei, über einen Dateinamen du_realdateiname und über einen Status des Uploads du_status. Dieses Feld verwaltet den Upload des durch den Anbieter erstellten und auf dem Datenbankserver gespeicherten Inhalts. Das Feld ppm_ansprechpartner enthält Daten über einen direkten Kontakt zwischen einem Administrator des Datenbanksystems und einem realen persönlichen Vertreter des Anbieters, beispielsweise eines Verantwortlichen einer Marketingabteilung in einem Unternehmen. Es enthält beispielsweise die Variablen asp_anrede, asp_name, asp_vorname, asp_telefon oder asp_email. Dieses Feld ist zweckmäßigerweise mit der Identifikationsvariable a_id verknüpft, sodass die darin enthaltenen Daten nur nach einer Authentifizierung geändert werden können.

Ein weiterer Bereich wird durch Felder gebildet, die Aspekte des durch das Inhalt beschriebenen Artikels oder des Inhalts selbst betreffen. Das Feld ppm_artikel enthält beispielsweise eine Variable kat_id über eine Artikelkategorie, beispielsweise Elektrowaren, Lebensmittel, Heimwerkerbedarf und dergleichen, weiterhin sind Variablen art_artikelnummer, art_bezeichnung, art_kurzbeschreibung oder auch art_bild1 sowie art_neupreis über Artikelnummern, Bezeichnungen, bildliche Darstellungen oder Preisangaben vorgesehen. Außerdem weist das Feld ppm_artikel ebenfalls die Variablen a_id und v_id über Verteilgebiete und Zugangsdaten auf.

Das Feld ppm_art_versandtag kategorisiert in der Variable a_id sowohl die Zugangsdaten des Anbieters als auch den Versandtag vt_versandtag. Ein Feld ppm_rechnungen dient mittels der Variable ch_id einer Rechnungsverwaltung und ist durch die Variable a_id zugriffsgeschützt.

Ein Feld ppm_counter_history verwaltet die Zugriffsstatistik auf die vom Anbieter auf die Datenbank eingestellten Inhalte. Das Feld weist ebenso einen Zugriffschutz in Form der Variable a_id auf. Es setzt sich zusammen aus Variablen unterschiedlicher Felder, wie beispielsweise einer Variablen Ic_wert oder bc_wert, die einen Logo- oder Bannerzähler betreffen, bzw. der Variable ec_wert, die einen Zähler für Emails umfasst. In entsprechender Weise sind mit dem Feld ppm_counter_history die Felder ppm_logo_counter, ppm_email_counter und ppm_banner_counter verknüpft.

Die bisher erwähnten Felder betreffen die Anbieterseite. Innerhalb der Datenbankstruktur ist die Anbieterseite über ein Feld ppm_kategorien mit Feldern für die Nutzerseite verknüpft. Die Felder der Nutzerseite werden in dem Beispiel aus Fig. 3 durch die Felder ppm_v_verbraucher, ppm_v_kategorien, ppm_v_verteilgebiete und ppm_infoselection beschrieben. Das Feld ppm_verbraucher enthält die üblichen personellen Daten des Nutzers, insbesondere eine Variable v_anrede, v_name, v_email und dergleichen Variablen. Wie auf der Anbieterseite werden auch auf der Nutzerseite im Feld ppm_v_verteilgebiete Variablen für einen Ortsbereich, beispielsweise vg_anfang, vg_ort oder vg_ende belegt. In gleicher Weise sind in dem Feld ppm_v_kategorien Variablen für eine Kategorienkennzahl kat_id vorgesehen. Das Feld ppm_infoselection legt in seinen Variablen v_id, kat_id, is_suchwert, is_suche_start und is_suche_ende Suchparameter fest.

Den dritte Bereich der Datenbankstruktur bilden alle für das Funktionieren des Verfahrens auf Seite einer Systempflege bzw. Systemadministration notwendigen Variablen. Diese sind in dem Beispiel aus Fig. 3 zu den Feldern ppm_texte, ppm_vtexte, ppm_konstanten und ppm_preise zusammengefasst. Die Felder ppm_texte und ppm_vtexte sind nur für den Systemadministrator zugänglich und umfasst in den Variablen bezeichnung und text alle Textausgaben des erfindungsgemäßen Verfahrens. Das Feld ppm_preise umfasst unter anderem Preisinformationen für die Einpflege eines Anbieter- und/oder Nutzeraccounts, die in den Variablen pr_email, pr_logo, pr_banner und pr_einpflege abgelegt sind. Das Feld ppm_konstanten enthält eine Reihe von notwendigen Systemkonstanten für die Datenbankstruktur selbst.

In den folgenden Figuren wird ein beispielhafter Ablauf des Verfahrens sowohl auf Seiten des Anbieters, als auch auf Seiten des Nutzers näher dargestellt. Es ist einsichtig, dass die nachfolgenden Ausführungsbeispiele in jedem Fall durch weitere Merkmale im Rahmen fachmännischen Handelns abgeändert werden können, ohne den Grundgedanken des Verfahrens zu verlassen. Die nachfolgenden Beispiele zeigen schematische "Screenshots" in Form schematischer Fenster einer graphischen Benutzeroberfläche. Die Fenster selbst können die durch einen Webbrowser angezeigten Fenster sein. Für eine eindeutige und übersichtliche Darstellung der grundgelegenden Verfahrensabläufe wurde bei den nachfolgenden Figuren auf die typischen und bekannten Navigations- und Menüleisten der Webbrowser verzichtet. Die im Folgenden beschriebenen Fenster können aber auch als so genannte Popup-Fenster erscheinen, die durch besondere Programmroutinen aufgerufen werden. Die zweckmäßige Ausgestaltung und das zweckmäßige Design der Fenster ist durch fachmännisches Handeln gegeben und für die Darstellung des erfindungsgemäßen Verfahrens nicht von ausschlaggebender Bedeutung.

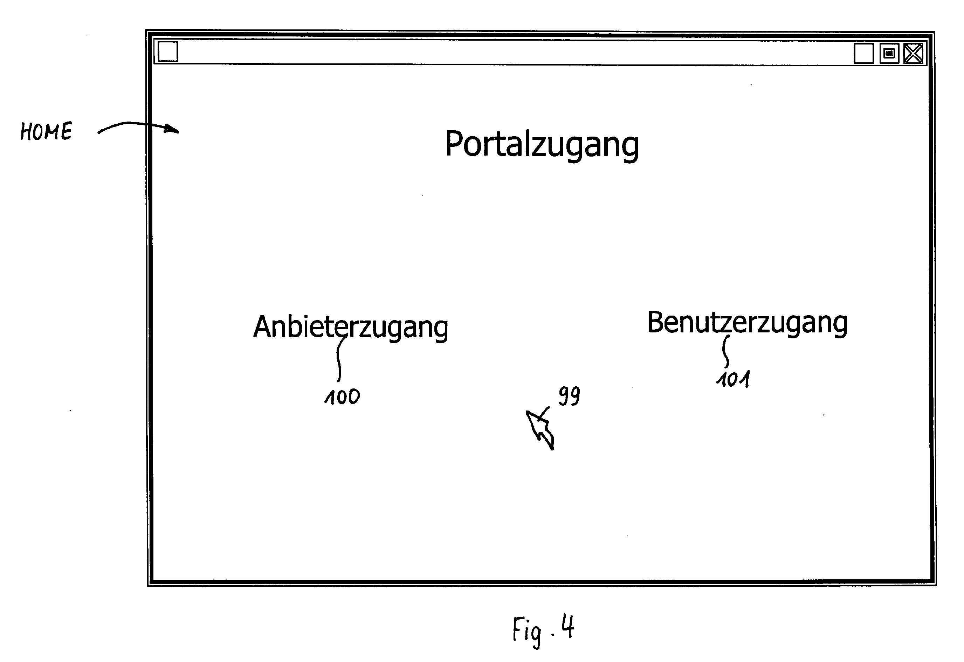

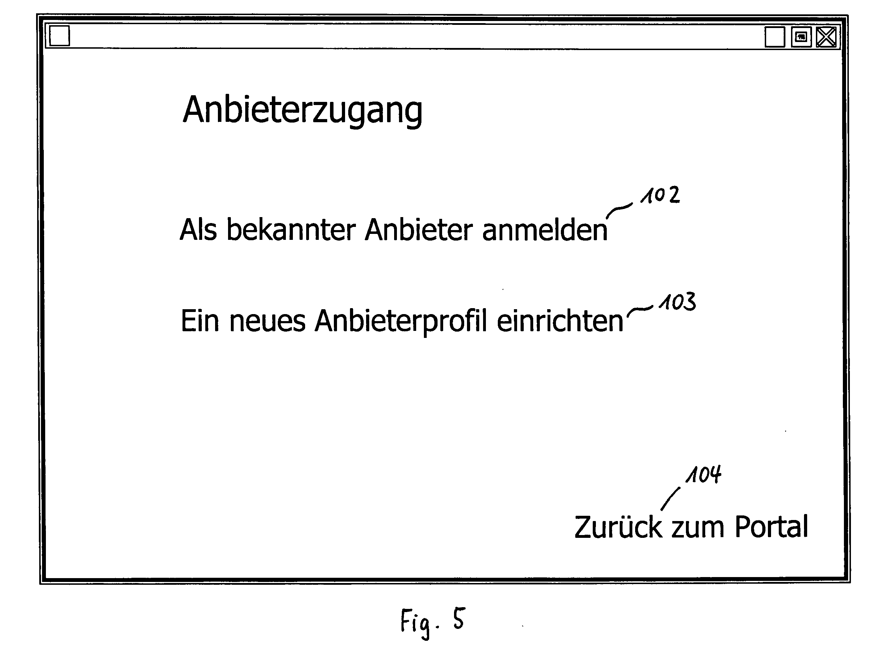

Fig. 4 zeigt einen schematischen Portalzugang in Form des bereits erwähnten HOME-Fensters. Der Portalzugang weist durch ein graphisches Anzeigeelement, z.B. einen Mauszeiger 99, aktivierbare Links 100 und 101 auf, die jeweils zu einem Anbieterzugang oder einem Benutzerzugang führen und bei einem Mausklick die entsprechenden Seiten aktivieren. Bei der Wahl des Anbieterzugangs wird das in Fig. 5 gezeigte Fenster geöffnet.

Fig. 5 zeigt ein beispielhaftes Fenster für einen Anbieterzugang. Optional kann über dieses Fenster entweder durch den Link 102 ein bekannter Anmelder sein Anmelderaccount aktivieren oder durch einen Administrator pflegen lassen. Der Link 104 führt auf die in Fig. 4 gezeigte HOME-Seite zurück.

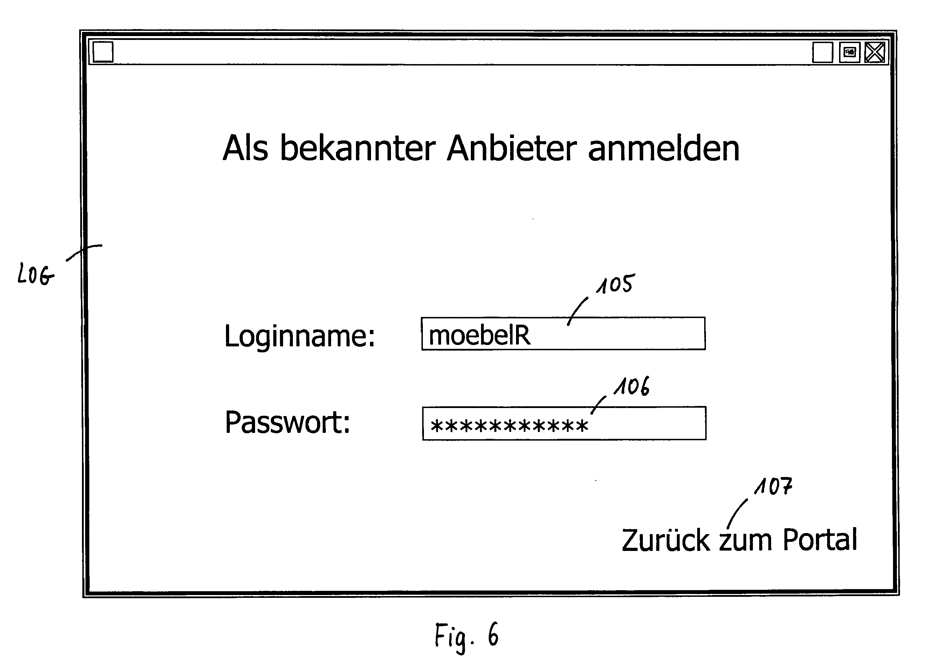

Fig. 6 zeigt beispielhaft ein typisches Loginfenster LOG. Das Loginfenster weist eine Eingabemaske 105 zum Eintragen eines Loginnamens für das Anbieteraccount bzw. eine Eingabemaske 106 zur Eingabe eines Passwortes auf. Diese Eingabemasken übergeben die dabei eingegebenen Daten an eine Passwortroutine. Mit dem Link 107 erfolgt ein Abbruch des Login-Vorgangs und eine Rückkehr zur Portalseite. Zweckmäßigerweise ist dabei vorgesehen, nur eine begrenzte Zahl von Passworteingaben zu ermöglichen und den Login-Vorgang zum Beispiel nach einer dreimaligen falschen Passworteingabe abzubrechen. Dadurch können maschinelle Routinen zum Herausfinden eines Passwortes ausgeschaltet werden. Stattdessen wird nach dem abgebrochenen Login-Verfahren ein Link mit dem Stichwort "Passwort vergessen?" angeboten, mit dem der Nutzer sich auf andere Weise authentifizieren kann.

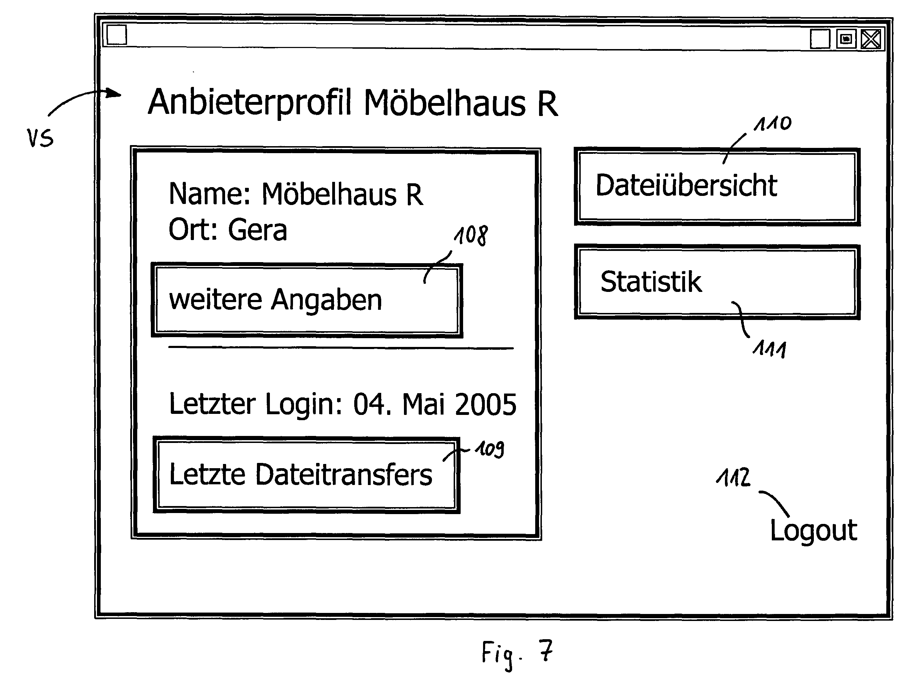

Fig. 7 zeigt eine beispielhafte Verwaltungsseite VS zum Editieren des Anbieterprofils. Die Verwaltungsseite weist Mittel zum Aktivieren weiterer Seiten auf, beispielsweise einen Knopf 108 zum Verändern weiterer personeller Daten, einen Knopf 109 zum Aktivieren einer Übersichtsseite für zuletzt ausgeführte Datei- und Inhalttransfers, einen Knopf 110 zum Öffnen einer Seite für eine Dateiübersicht und einen Knopf 111 zum Öffnen einer Seite über eine Statistik der gespeicherten Inhalte, insbesondere zum Abrufen über Downloads von Seiten der Nutzer. Ein Logout-Knopf 112 ermöglicht ein Ausloggen aus dem Anbieterprofil.

Je nach Umfang des Anbieterprofils kann der Anbieter das Einpflegen der Inhalte und das Betreuen des Accounts einem Administrator des zentralen Datenbankservers bzw. der Datenbank überlassen. In diesem Fall übermittelt der Anbieter alle dazu notwendigen Daten zum Beispiel per Email an den Administrator.

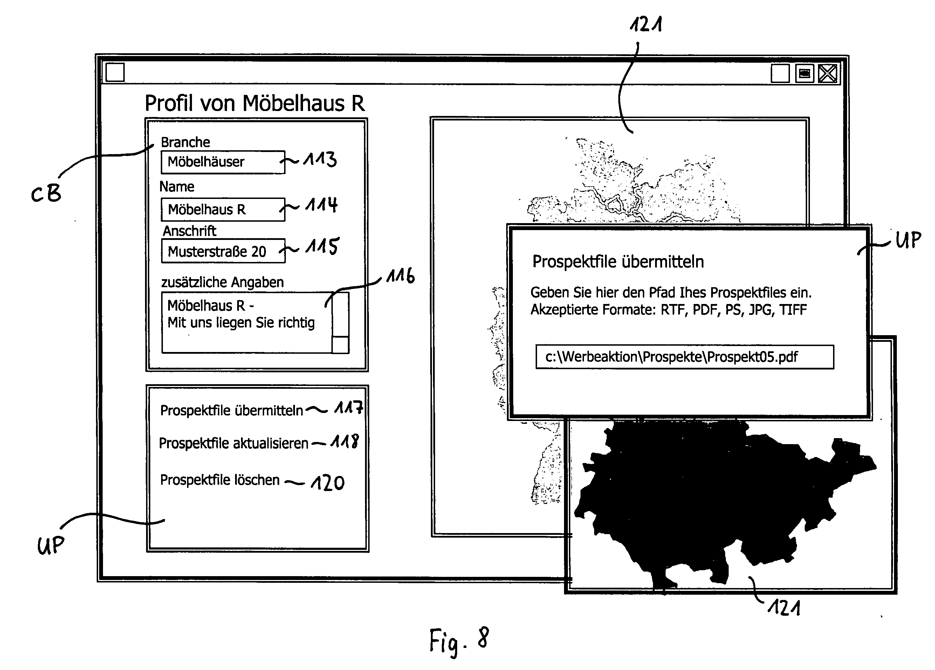

Fig. 8 zeigt eine beispielhafte Seite cB zum Ändern von Anbieterdaten, die durch den Knopf 108 aus Fig. 7 aktiviert wird. Die Seite weist eine Reihe von Eingabemasken 113, 114, 115 und 116 zum Eingeben einer Branche, eines Namens und einer Anschrift auf. Weiterhin können in ein Textfeld 116 eine Reihe von anbieterspezifischen Informationen frei eingegeben werden. Eine Reihe von Links 117, 118 und 120 ermöglichen die Aktivierung von Dialogfenstern zum Übertragen eines Inhalts, zum Aktualisieren eines Inhalts oder zu einem Löschen des Inhalts.

In dem Beispiel aus Fig. 8 ist gerade ein Unterfenster UP zum Ausführen eines Dateiuploads geöffnet, mit dem der Anbieter einen Inhalt in einem vorgegebenen Format von seinem eigenen Endgerät, d.h. aus einem lokalen Verzeichnis auf den zentralen Datenbankserver laden kann. In dem hier gezeigten Beispiel können nicht nur XML-Dokumente, sondern auch diverse Graphikformate wie JPG- oder TIFF-Files, aber auch RTF- oder PDF-Dokumente übertragen werden.

Zur komfortablen Auswahl eines Ortes oder Ortsbereiches des Anbieters, mit der zum Beispiel ein gewünschtes Verbreitungsgebiet des Inhalts oder der Standort des Anbieters festgelegt werden kann, dient eine interaktive Kartendarstellung 121, bei der durch Mausklicks und in einem Zoom-Vorgang gewisse Ortsbereiche, in diesem Beispiel Bundesländer und einzelne Kreise, angeklickt werden können. Die interaktive Kartendarstellung kann auf der Grundlage eines reinen HTML-Codes oder auch durch JAVA-Applets realisiert sein. Dabei werden beispielsweise die Werte der Variablen vg_anfang, vg_ende und vg_ort in der Datenbankstruktur aus Fig. 3 verändert bzw. gesetzt.

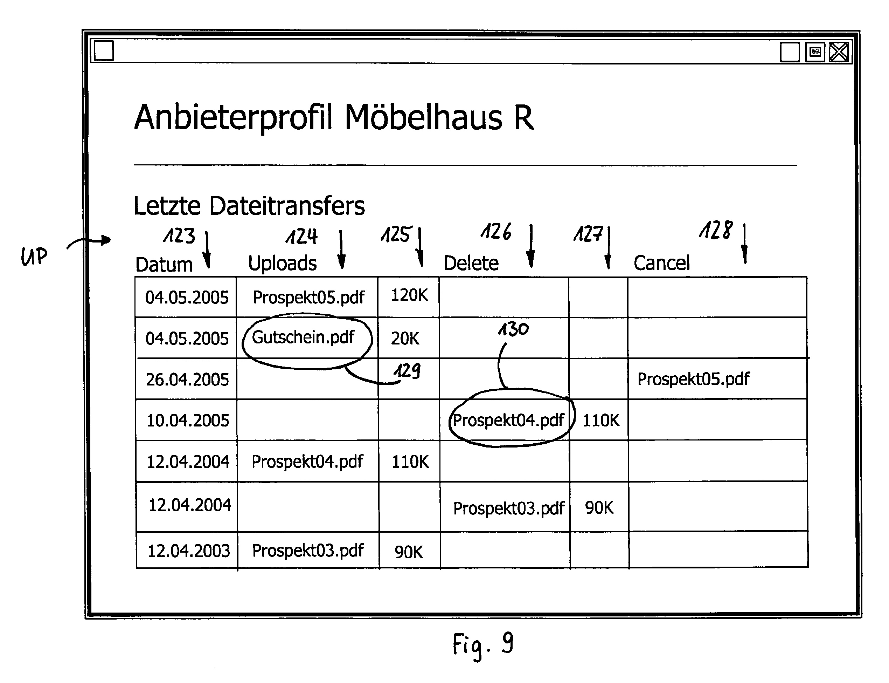

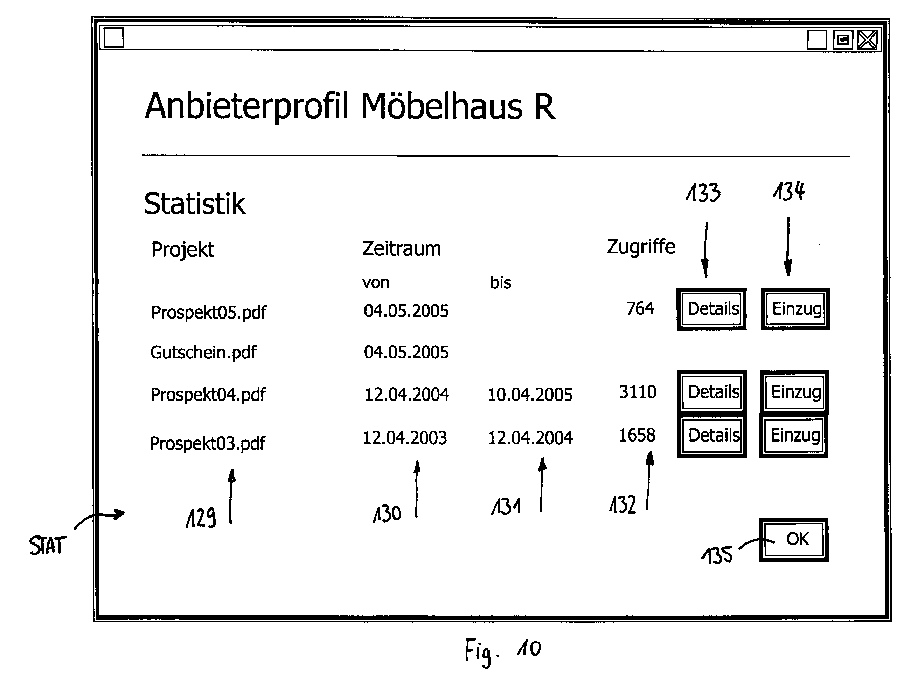

Ein weiteres Beispiel für eine umfangreichere Seite UP zum Inhaltupload zeigt Fig. 9 Diese Seite wird insbesondere durch den Knopf 109 aus Fig. 7 aufgerufen. In dem hier gezeigten Beispiel wird eine tabellarische Übersicht über bereits erfolgte Inhaltuploads angezeigt. Die Tabelle zeigt beispielsweise eine Datumsspalte 123, eine Spalte mit Dateiuploads 124, eine Spalte über den von den Uploads besetzten Speicherplatz 125, eine Spalte über gelöschte Inhalte 126 mit einer Angabe 127 über den dabei frei gewordenen Speicherplatz und eine Spalte 128 über abgebrochene Inhalt-Transfers.

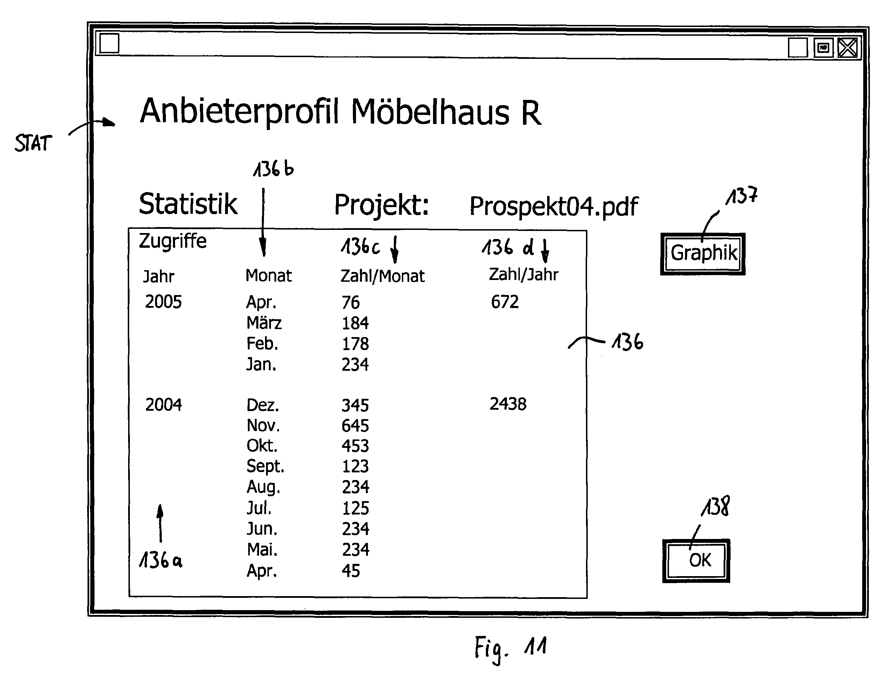

Eine beispielhafte, durch den Knopf 111 aus Fig. 7 aktivierbare Statistikseite STAT zeigt Fig. 10. In dem hier dargestellten Beispiel wird eine tabellarische Auflistung angezeigt, aus der der Anbieter Zugriffe auf dessen auf die Datenbank eingestellten Inhalt entnehmen kann. Eine erste Spalte 129 listet die jeweiligen Inhaltnamen auf. In dem hier dargestellten Beispiel sind dies PDF-Files, die Filetypen sind jedoch grundsätzlich beliebig und schließen XML-Dokumente ausdrücklich mit ein. Eine zweite Spalte 130 zeigt in Verbindung mit einer Spalte 131 einen Überblick über den Zeitraum, in dem der Inhalt eingestellt wurde. Dabei zeigt Spalte 130 den Beginn und Spalte 131 das Ende des Einstellzeitraums an. Eine Spalte 132 listet die absoluten Zugriffszahlen für den jeweiligen Inhalt auf. Durch eine Reihe von Knöpfen 133 und 134 können weitere Details über die Zugriffsdaten bzw. die Einzugsgebiete der Zugriffe abgerufen werden. Mittels eines OK-Knopfes 135 kann das Fenster STAT geschlossen und zum vorherigen Fenster zurückgekehrt werden.

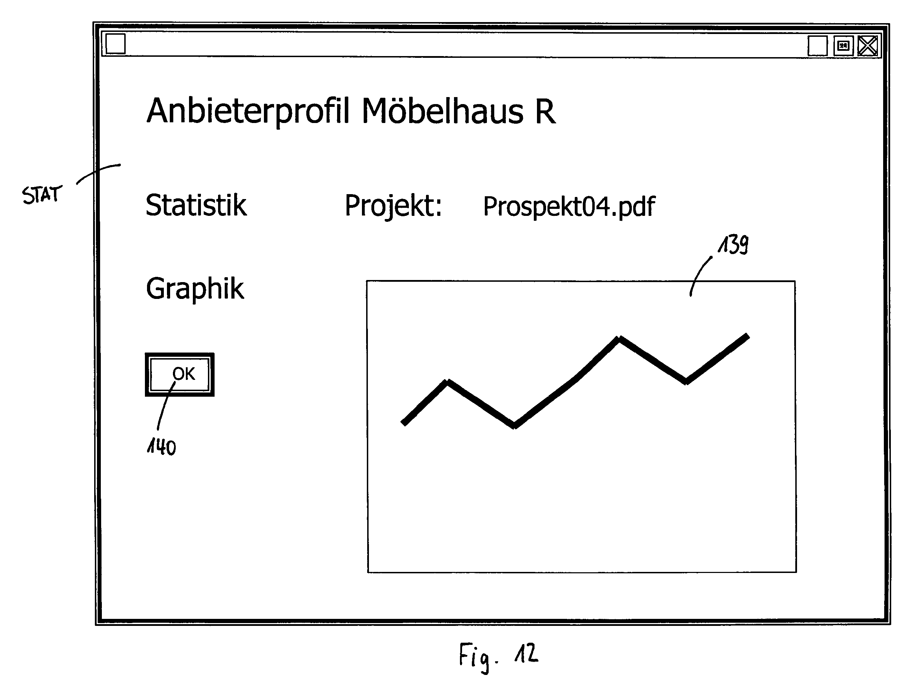

Fig. 11 zeigt eine beispielhafte detaillierte Auflistung für einen der in Fig. 10 aufgelisteten Inhalte. Der Anbieter ruft diese Seite auf, indem er in der tabellarischen Auflistung in Fig. 10 den Knopf "Details" in der zu dem Inhalt "Prospekt04.pdf" gehörenden Tabellenzeile anklickt oder auf andere Weise aktiviert. Das Fenster in Fig. 11 zeigt eine tabellarische Auflistung 136 mit Jahresangaben 136a, Monatsbezeichnungen 136b, monatlichen Zugriffszahlen 136c und Zugriffszahlen pro Jahresverlauf 136d. Der Anbieter gewinnt somit einen Überblick über das monatliche Interesse der Nutzer an dessen Inhalt. Mittels eines Knopfes 137 kann eine graphische Darstellung der zahlenmäßig angegebenen Zugriffe aufgerufen werden, die den Überblick über die Statistik nachhaltig vereinfacht. Ein Knopf 138 schließt das Fenster.

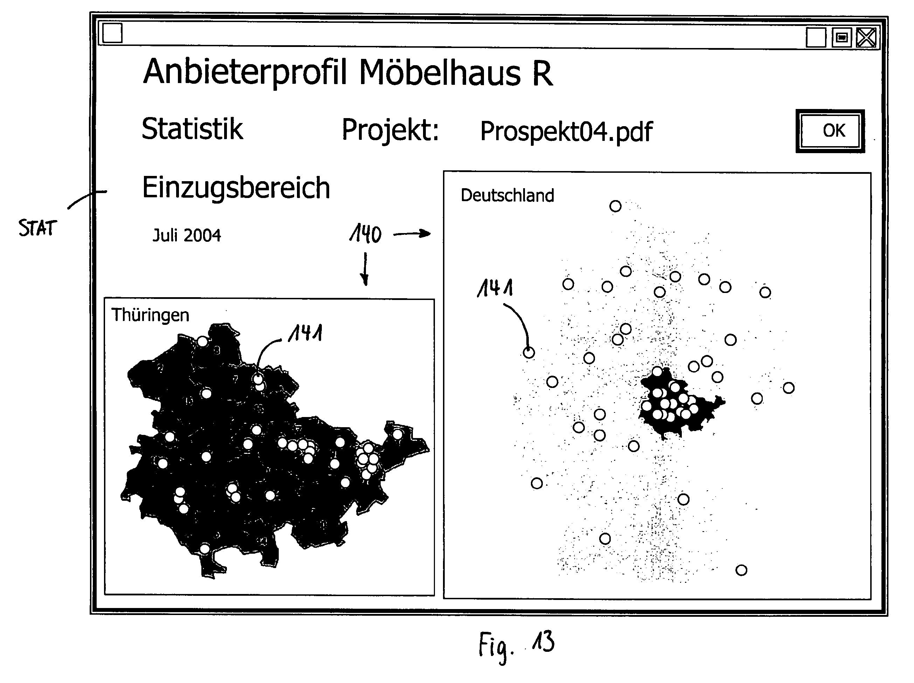

Fig. 12 zeigt ein beispielhaftes Graphik-Fenster. Das Fenster zeigt eine graphische Darstellung 139, bei der die Werte aus der Tabelle 136 in Form eines Diagramms aufbereitet sind.

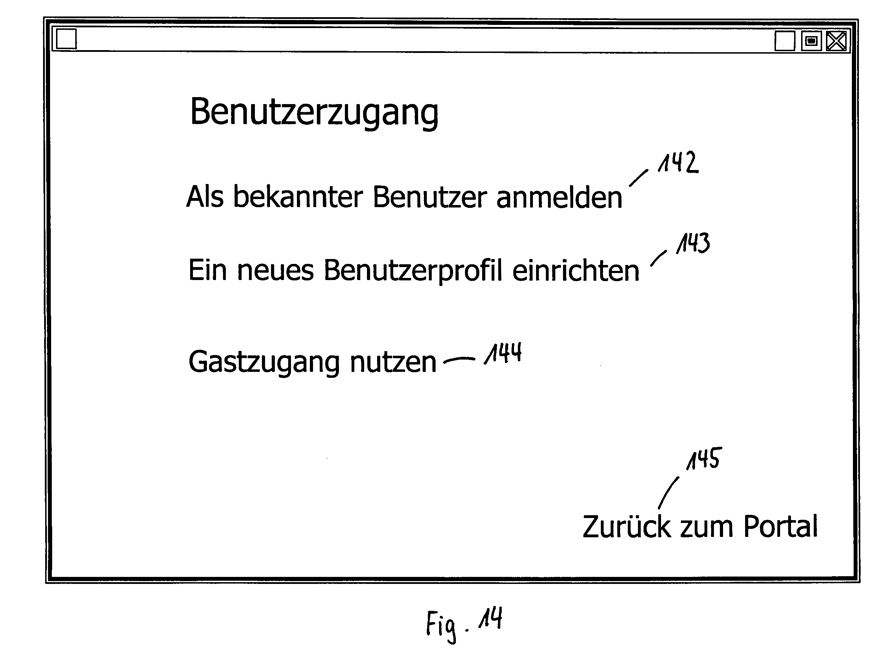

Fig. 13 zeigt ein beispielhaftes Fenster STAT mit einer Darstellung von Einzugsbereichen des Anbieterinhalts. Jeder Nutzer gibt, wie im Folgenden näher erläutert wird, eine Angabe zu dessen eigenem Ort oder Ortsbereich, die in der Datenbankstruktur abgelegt ist. Beim Abrufen des Inhalts weist sich der Nutzer aus und aus diesem Grund können die Einzugsgebiete erfasst werden, von denen aus in irgendeiner Form Interesse am Inhalt des Anbieters bekundet worden ist. Dieses Fenster wird durch das Anklicken eines der Knöpfe 134 aktiviert. Es enthält eine Kartendarstellung 140, die zoomfähig sein kann und eine Reihe von Markierungspunkten 141 enthält, die die jeweiligen Standorte der Nutzer des Inhalts bezeichnen.

Die in den Figuren 10, 11, 12 und 13 enthaltenen statistischen Angaben können gegebenenfalls als Grundlage zur Berechnung von Nutzungsgebühren verwendet werden, die der Anbieter als Gegenleistung für die Nutzung des Portals bzw. der Hardware und Software des zentralen Datenbankservers zu entrichten hat.

Im Folgenden werden die für den Nutzer verfügbaren Fenster beispielhaft erläutert. Diese ermöglichen es, nach Anbietern zu suchen, deren Inhalte abzurufen und sich Inhalte nach eigener Wahl zusammen zu stellen bzw. zusammen stellen zu lassen. Wie bereits erwähnt, wird dazu ein Nutzeraccount eingerichtet und ein Nutzerprofil erstellt. Diese grundlegenden Funktionen werden durch den Nutzer selbst ausgeführt. Die nachfolgenden Fenster stellen dem Nutzer entsprechende Bedienmöglichkeiten bereit.

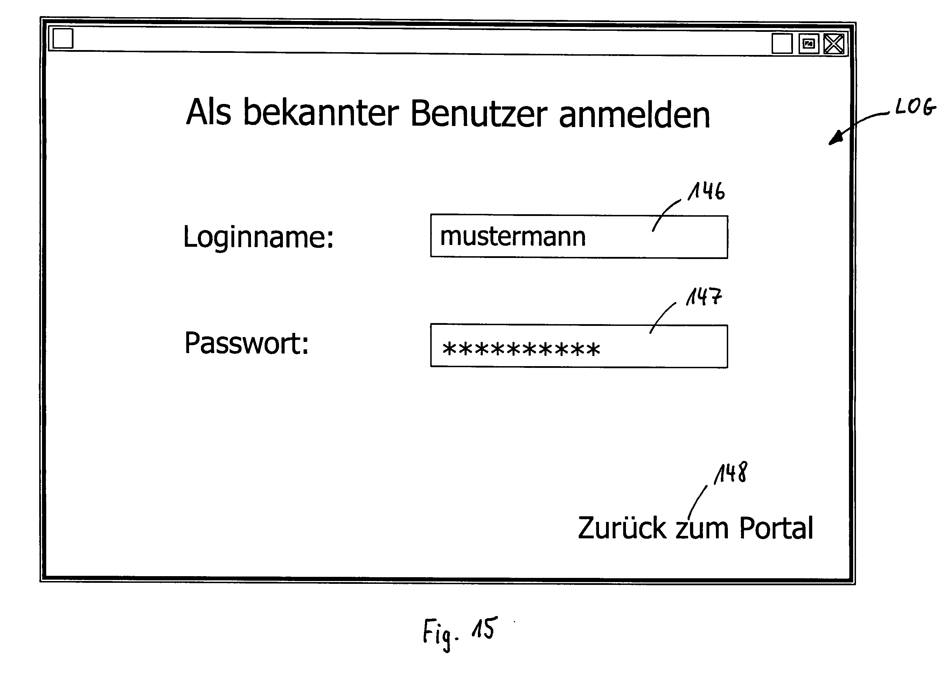

Fig. 14 zeigt ein beispielhaftes Fenster zum Aufrufen eines Nutzerzugangs. Bei diesem Ausführungsbeispiel wird ein Link 142 zum Anmelden eines bereits bekannten Nutzers auf einem bereits eingerichteten Nutzeraccount, ein Link 143 zum Einrichten eines neuen Nutzeraccounts und zum Ausführen der dafür erforderlichen Programmschritte präsentiert. Zusätzlich dazu ist bei dem abgebildeten Beispiel auch ein Link 144 zum Nutzen eines Gastzugangs mit eingeschränkten Funktionalitäten vorgesehen. Der Gastzugang ist nicht zwingend notwendig. Er kann beispielsweise durch eine allgemein zugängliche Informationsseite ersetzt werden, die alle Fragen von Interessenten vorab klärt. Hierzu können insbesondere Kontaktformulare oder einschlägige FAQ-Übersichten vorgesehen sein. Ein Link 145 schließt das Fenster und führt zurück zur Portalseite aus Fig. 4.

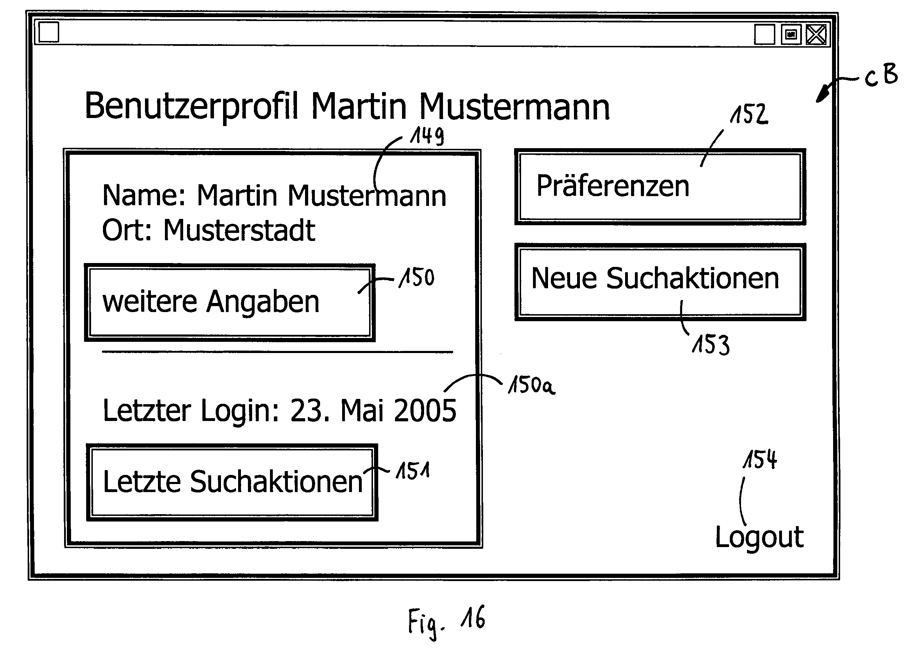

Fig. 15 zeigt ein beispielhaftes Login-Fenster LOG zum Aktivieren des Nutzeraccounts mit entsprechenden Eingabemasken 146 und 147. Ein Schließen der Seite ist mittels des Links 148 möglich.

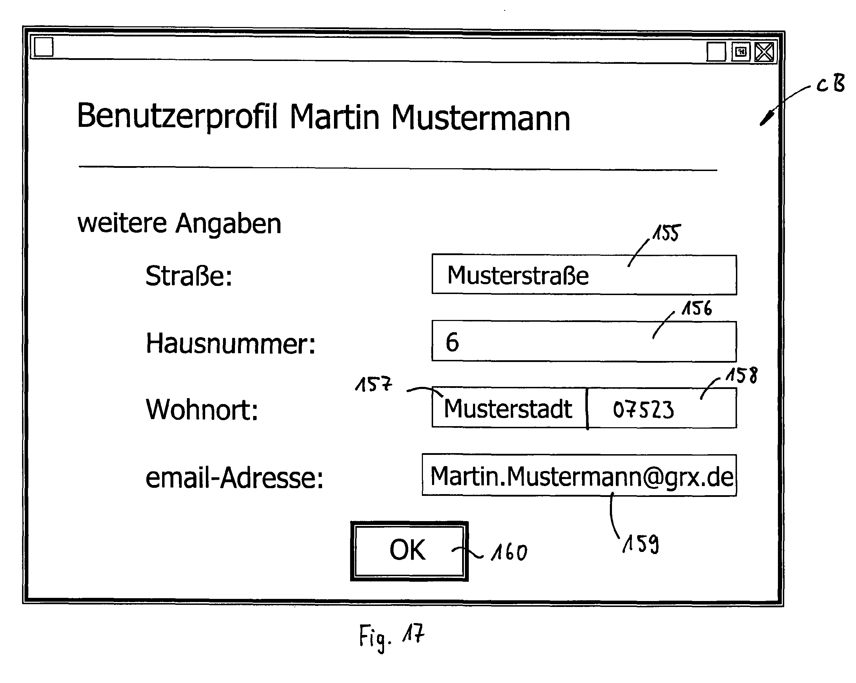

Fig. 16 zeigt eine Seite cB zum Editieren von Nutzerdaten. Sie enthält den Namen 149 des Nutzers, einen Knopf 150 zum Aktivieren weiterer Angaben, eine Information über den letzten Login-Zeitpunkt 150a, einen Knopf 151 zum Anzeigen der letzten Suchaktionen, einen Knopf 152 zum Setzen und Verändern nutzerspezifischer Präferenzen und einen Knopf 153 zum Aktivieren neuer Suchaktionen. Ein Link 154 führt auf eine der vorhergehenden Seiten zurück und bewirkt insbesondere einen Logout-Vorgang des Nutzers.

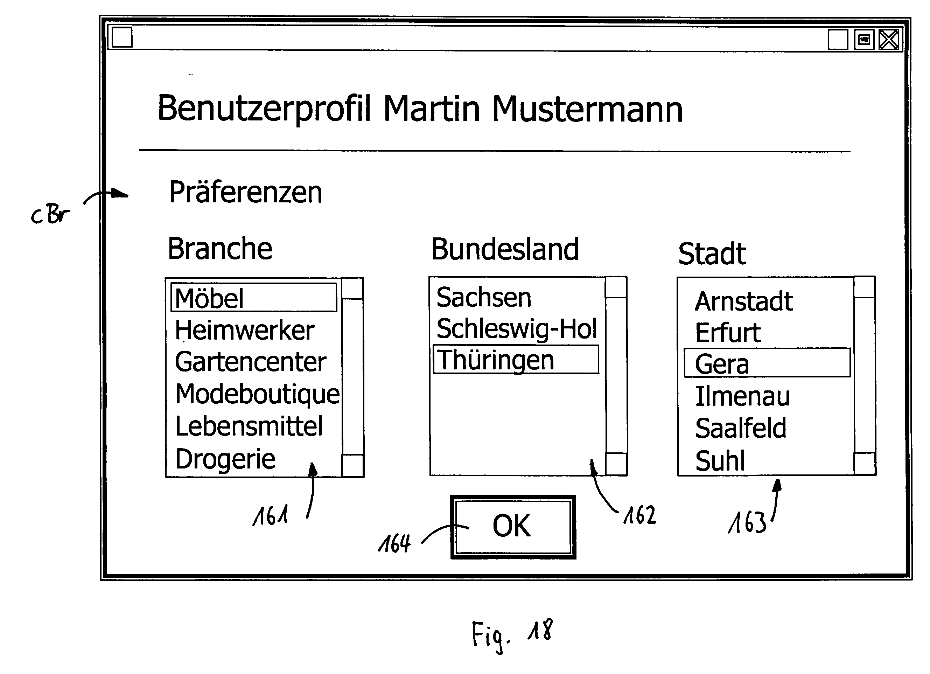

Fig. 17 zeigt eine weitere Seite cB, die sich insbesondere durch das Anklicken des Knopfes 150 aus Fig. 16 aufrufen lässt. Auf dieser Seite kann der Benutzer durch eine Reihe von Eingabemasken 155, 156, 157, 158 und 159 persönliche Daten, wie z.B. Straße, Hausnummer, Wohnort, Postleitzahl und Email-Adresse eintragen und ändern. Die Rubrik "Postleitzahl" erlaubt eine statistische Erfassung des für den Anbieter verfügbaren Einzugsbereichs. Die Gebiete, aus denen Nutzer Informationen über den Anbieter und dessen Angebote aufrufen wollen bzw. anfordern, werden über die gezeigte Kartendarstellung definiert. Zusätzlich können bei einer hier nicht gezeigten Ausführungsform auch Geburts- und Altersangaben eingegeben werden, die ebenfalls statistisch ausgewertet werden können.

Ein Knopf 160 schließt das Fenster und bestätigt die Eingaben in den entsprechenden Eingabemasken.

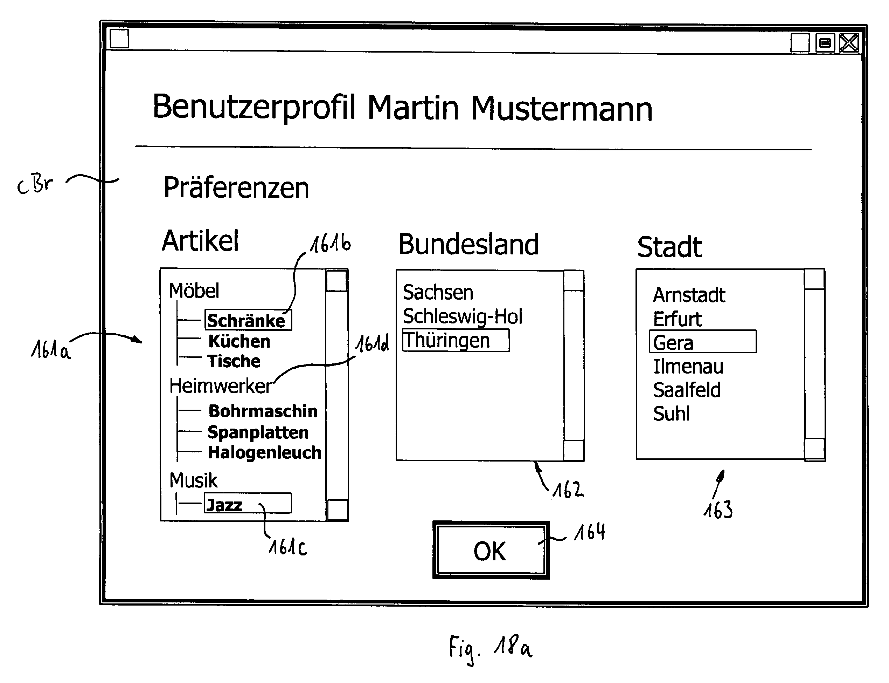

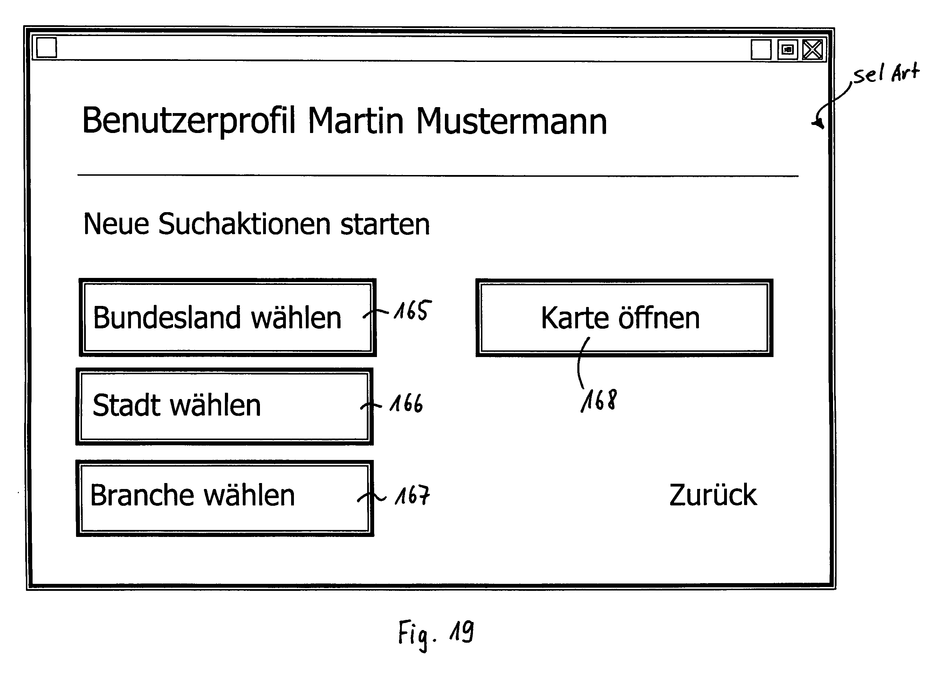

Fig. 18 zeigt ein beispielhaftes Fenster cBr, mit dem der Nutzer Branchen, Bundesländer und Städte als Präferenzen für eine Suche oder Recherche vorgeben kann. Das Fenster aus Fig. 18 wird durch das Anklicken des Knopfes 152 aus Fig. 16 aufgerufen. In dem hier gezeigten Beispiel weist das Fenster cBr Auswahlmenüs 161, 162 und 163 zum selektiven Anwählen einer Branche, eines Bundeslandes und einer Stadt auf, für dessen Angebote sich der Nutzer interessiert. In dem hier gezeigten Beispiel sind Möbelmärkte in Thüringen und insbesondere in der Stadt Gera als Suchkriterien durch den Nutzer ausgewählt worden. Die Auswahlmenüs können auch multiple Auswahlen zulassen, bei denen der Nutzer mehrere Optionen wählt. So kann der Nutzer zum Beispiel gleichermaßen Möbelmärke und Musikläden auswählen. Der Knopf 164 schließt das Fenster und beendet den Auswahlvorgang. Die in dem Fenster aus Fig. 18 gesetzten Suchparameter können als Standardparameter verarbeitet werden, so dass der Nutzer nicht bei jedem Einlogvorgang seine Präferenzen neu wählen muss. Mittels eines hier nicht gezeigten Knopfes und einer entsprechenden Programmroutine kann der Nutzer auch selbständig darüber entscheiden, ob er die von ihm ausgewählten Parameter als Standardparameter setzen möchte oder nicht. Es ist zweckmäßig, möglichst wenige Suchparameter als wirklich entscheidende Parameter wählen zu müssen und vorzusehen. Deswegen ist bei der Suche nach Artikeln allein die Eingabe der Artikelbezeichnung wirklich notwendig, während alle anderen Suchparameter optionale Parameter sind. Bei dem Beispiel aus Fig. 18 startet der Nutzer seine Suche mit der Festlegung von Artikeln. Diese sind wie aus Fig. 18 ersichtlich, in einem Baumdiagramm vorgeordnet und werden von Nutzer angeklickt. So ist es beispielsweise möglich, einen Artikel "Schränke" aus dem Bereich "Möbel" und aus dem Bereich "Musik" einen Artikel "Jazz", d.h. Angebote zu der entsprechenden Musikrichtung, auszuwählen. In Verbindung damit kann der Nutzer seine Suche nun auch geographisch verfeinern, indem er Bundesländer und Städte aus den entsprechenden Menüs auswählt. Die dargestellten Funktionen entsprechen denen aus Fig. 19.

Fig. 18a zeigt eine weitere Ausführungsform des Fensters cBr. Anstatt des Auswahlmenüs 161 über eine Branche sind in diesem Fall Stichworte oder Oberbegriffe über verschiedene Artikel in einem Auswahlmenü 161a zusammengefasst. Zweckmäßigerweise werden diese Stichworte als ein Baumdiagramm angezeigt. So finden sich beispielsweise Schränke im Baumdiagramm unter "Möbel" und "Jazz" unter Musik. Das Erstellen des Baumdiagramms erfolgt unter einem Rückgriff auf die innere Struktur der Datenbank, bei denen die verfügbaren Informationen der einzelnen Anbieter zu bestimmten Warengruppen in ähnlicher Weise katalogisiert und verwaltet werden. Das Baumdiagramm bietet eine sehr vorteilhafte Möglichkeit, Suchbegriffe weiter oder enger zu fassen. So ist es beispielsweise möglich, den Begriff "Heimwerker" anzuklicken und damit alle darunter katalogisierten Artikel mit in den Suchvorgang einzubeziehen. Wie bereits in Verbindung mit Fig. 18 erwähnt, können auch hier zusätzliche Selektierungen nach Bundesländern und Städten vorgenommen werden.

Fig. 19 zeigt ein weiteres Beispiel für ein Auswahlfenster selArt zum Auswählen von Branchen und Ortsbereichen bzw. Artikeln und zum Starten neuer Such- bzw. Rechercheaktionen. Durch Aktivieren der Knöpfe 165, 166 und 167 können Auswahlfenster oder Auswahlmenüs geöffnet werden, mit denen der Nutzer Orte, Ortsbereiche und Branchen auswählen kann. Ein Knopf 168 öffnet eine interaktive Kartendarstellung.

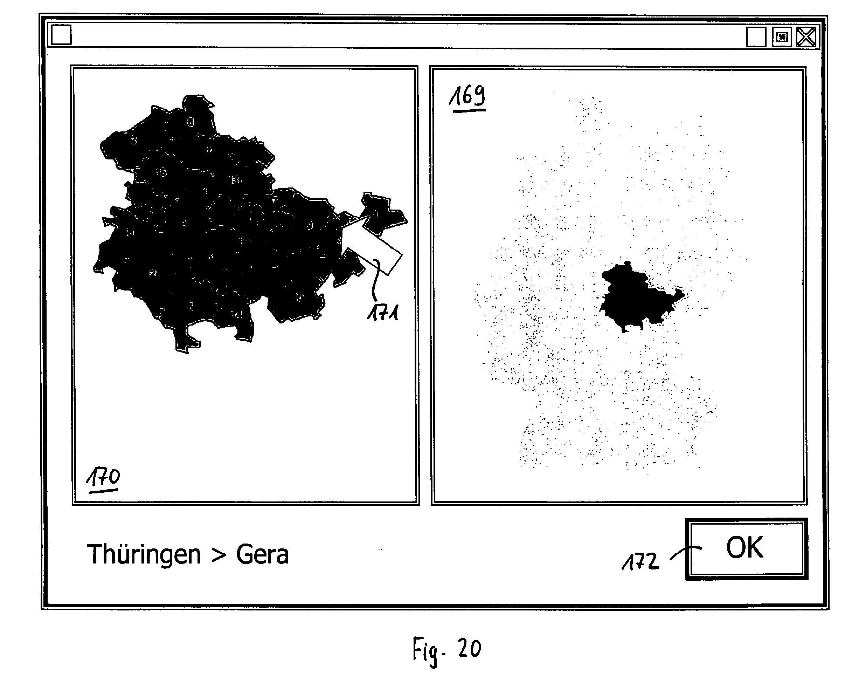

Fig. 20 zeigt ein denkbares Beispiel. In dem hier gezeigten Fall wählt der Nutzer in einem ersten Übersichtskartenteil 169 ein Bundesland oder einen anderweitig festgelegten großräumigen Bereich, etwa einen Postleitzahlenbereich, aus denen der Nutzer Angebote erhalten möchte, mit Hilfe einer Mausbewegung und eines Mausklicks aus. Parallel dazu wird dieser Bereich im linken Kartenteil 170 näher angezeigt. Dabei kann der Nutzer nunmehr einzelne Landkreise oder vergleichbare Ortsbereiche durch einen Mauszeiger 171 anklicken. Durch die graphische Auswahl wird im Datenbanksystem eine entsprechende Variable mit einem dafür vorgesehenen Wert belegt. Alternativ dazu können natürlich zunächst Bundesländer ausgewählt und danach Postleitzahlbereiche selektiert werden, aus denen der Nutzer Angebote erhalten möchte.

So kann beispielsweise das Anklicken eines Landkreises auf der Karte 170 direkt die Zuordnung einer Postleitzahl in der Variable vg_ort im Feld ppm_v_verteilgebiete bedeuten. Diese steht nunmehr für interne Verarbeitungsschritte zur Verfügung. Die graphische Darstellung der Karten 169 und 170 erfolgt im einfachsten Fall durch einen HTML-Code, bei dem durch ein Anklicken eines Links Ortskennzahlen erzeugt und der Datenbank übergeben werden. Eine Verwendung einer durch den Flash-Player© von Macromedia© erzeugten Darstellung oder eines JAVA-Applets ist jedoch ebenfalls möglich. Das JAVA-Applet erzeugt dabei die Ortskennzahl in Abhängigkeit von der Position des Mauszeigers und übergibt diesen Wert an die Datenbankstruktur. Parallel dazu kann die graphische Auswahl durch eine Textausgabe ergänzt werden, die je nach der Mauszeigerposition wechselt. Beim Bewegen über die Karte 169 wird beispielsweise das Bundesland - in diesem Fall Thüringen - als Text angezeigt, während die Bewegung des Mauszeigers über das Areal des Kreise in der Karte 170 die Angabe des jeweiligen Kreises - in diesem Fall Gera - zu der Textangabe 171 hinzufügt. Der Nutzer hat somit die graphische Darstellung und die Textbotschaft immer im gleichzeitig im Blick. Der Knopf 172 schließt das Fenster.

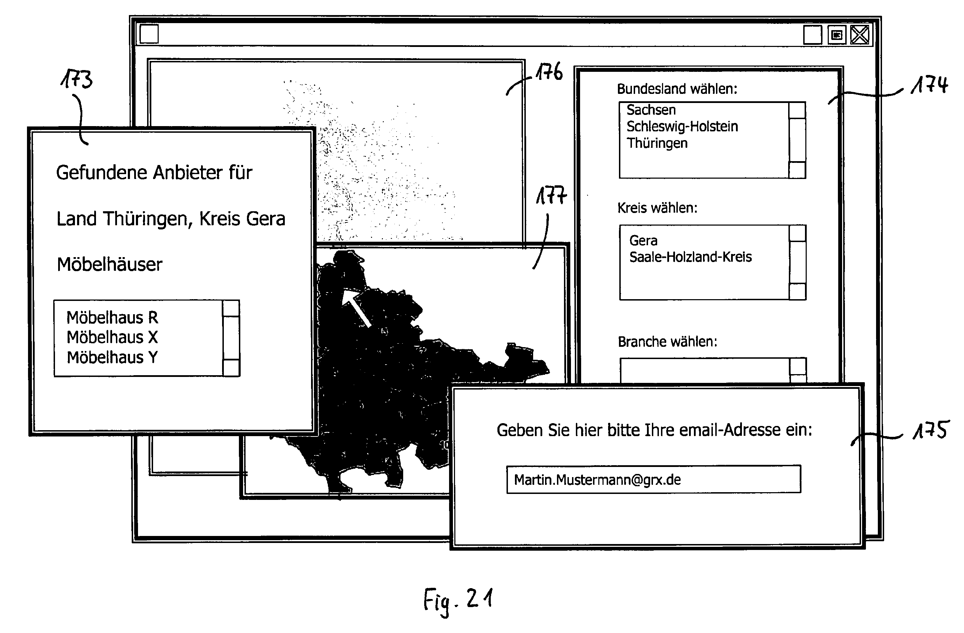

Fig. 21 zeigt eine weitere beispielhafte Fenstergestaltung zur Darstellung von Rechercheergebnissen und zur Eingabe von Suchparametern. Hierbei handelt es sich um eine Anzahl von so genannten Popup-Fenstern, die zur Ausgabe gefundener Rechercheergebnisse 173, zur menügesteuerten Eingabe von Orten und Ortsbereichen 174, zur Eingabe einer Email-Adresse 175 bzw. zur graphischen Ein- und Ausgabe von Orten und Ortsbereichen 176 und 177 dienen. Der Nutzer wählt hierbei im Popup-Fenster 174 Orte oder Ortsbereiche bzw. Branchen aus oder kann sie in den Karten 176 und 177 anklicken. Er erhält im Fenster 173 eine Auflistung 178 über gefundene branchenspezifische Anbieter, beispielsweise Möbelhäuser R, X und Y, aus denen er auswählen kann. Das Popup-Fenster 175 dient dazu, eine Email-Adresse des Nutzers einzugeben, an die Inhalte über die Möbelhäuser R, X und/oder Y versendet werden sollen. Alternativ dazu ist auch die Angabe einer Mobilfunknummer möglich, an die eine SMS, MMS oder eine WAP-Nachricht zu versenden ist.

Dabei besteht auch die Möglichkeit, mehrere Angebote zu mehreren Branchen und mehreren Anbietern zu akkumulieren und in einem virtuellen "Einkaufszettel" zu sammeln. So ist es beispielsweise für den Nutzer möglich, sich alle die Inhalte eines Möbelhaus-Anbieters für ein näheres Ansehen auszuwählen, die bestimmte Sonderangebote oder bestimmte Möbelarten betreffen, die dabei anfallenden Suchergebnisse zu speichern und anschließend von einem Plattenladen alle Inhalte auszuwählen, die die Angebote spezieller Musikrichtungen umfassen. Auf Seiten des Nutzers erfolgt demnach ein Zusammenfassen einzelner, frei gewählter Inhalte.

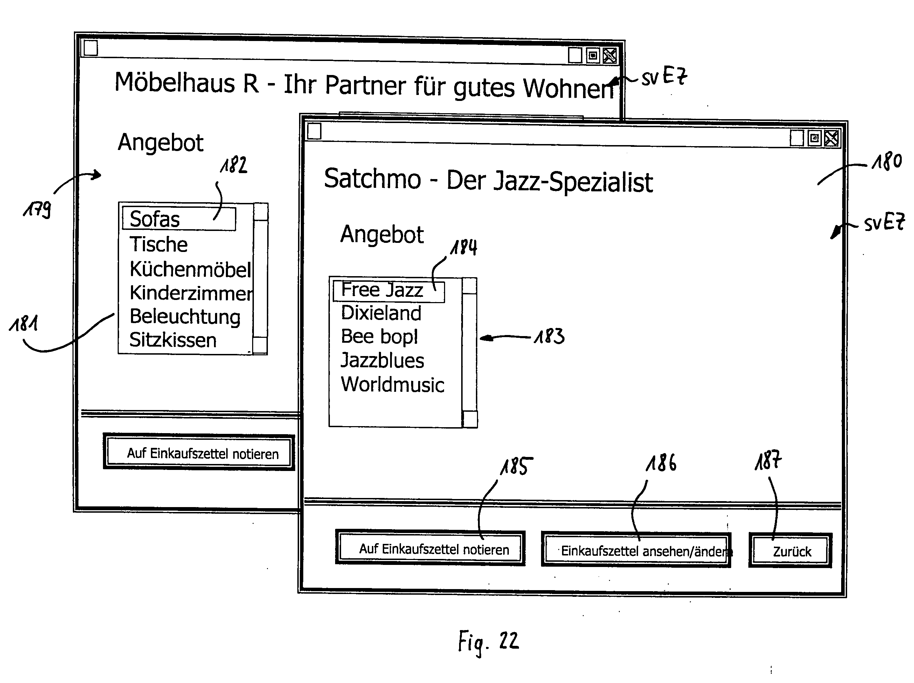

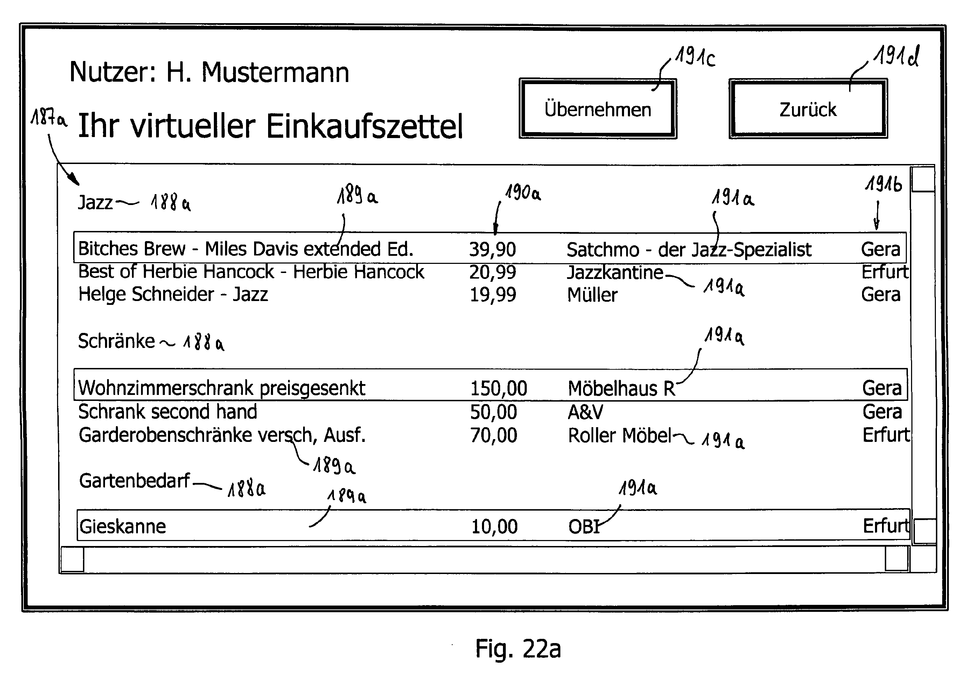

Fig. 22 zeigt ein derartiges Beispiel. In dem hier gezeigten Fall hat der Nutzer eine Recherche nach Möbelhäusern und eine Recherche nach Musikgeschäften ausgeführt und zwei Suchresultate für verfügbare Anbieter erhalten. Zu jedem Suchresultat ist jeweils eine Seite 179 bzw. 180 erzeugt worden, die in dem hier dargestellten Beispiel übereinander angezeigt werden. Die Fenster erlauben eine Auswahl unter verschiedenen Inhalten der jeweiligen Anbieter. So ist beispielsweise die Inhaltmenge des im Fenster 179 angezeigten Möbelhauses hinsichtlich verschiedener Möbelarten vorstrukturiert. Der Nutzer kann nunmehr mittels eines Menüs 181 eine Reihe von Inhalten auswählen. In dem hier gezeigten Beispiel wählt er beispielsweise mittels eines Mausklicks und einer entsprechenden Aktivierung 182 Inhalte aus, die sich auf das Angebot von Sofas des Möbelhauses beziehen. In einer dazu analogen Weise erfolgt die Inhaltauswahl im Fenster 180. Der in diesem Fenster aufgeführte Anbieter bietet nach Musikstilen vorstrukturierte Inhalte an. In einem Menü 183 kann nun der Nutzer die jeweiligen Teilmengen der Inhalte aktivieren. In dem hier gezeigten Beispiel ist eine weitere Aktivierung 184 auf die Option "Free Jazz" gesetzt.

Jedes der Fenster 179 und 180 weist eine Reihe von Knöpfen zur Verwaltung der so getroffenen Auswahlen auf. So wird beispielsweise mittels eines Knopfes 185 das innerhalb der Menüs 181 bzw. 183 ausgewählte Inhalt in einem virtuellen Einkaufszettel zwischengespeichert. Dieser wird in Form eines nutzerspezifischen Feldes in der Datenbankstruktur gespeichert und verweist eindeutig auf die jeweiligen Teilinhalte der jeweiligen Anbieter bzw. auf die dazu entsprechenden Datenbankfelder und -variablen. Mittels eines Knopfes 186 kann eine Editierroutine bzw. ein Editierfenster zum Ansehen bzw. Ändern des virtuellen Einkaufszettels gestartet werden. Ein in jedem Fenster angeordneter Knopf 187 schließt das entsprechende Fenster.

Im virtuellen Briefkasten werden alle Inhalte der aktuellen Selektion für den Nutzer bereitgestellt. Dort erscheinen die Informationen schon nach Anbietern sortiert. Weiterhin hat der Nutzer die Möglichkeit, mit einer Suchmaske nach bestimmten Bezeichnungen zu suchen. Er erhält daraufhin eine Liste mit Informationen über die Artikel, die seiner Suchanfrage entspricht. Informationen über Artikel, die den Nutzer besonders interessieren, kann er auf dem virtuellen Einkaufszettel vermerken. Dieser kann dann als Einkaufsliste ausgedruckt werden. Die Artikel auf dem Einkaufszettel sind nach Anbieter sortiert aufgelistet.

In diesem Zusammenhang ist darauf hinzuweisen, dass die Recherche aufgrund der zugrunde liegenden Datenbankstruktur nicht hierarchisch strukturiert ist. Der Nutzer kann seine Recherchen mit der Suche nach Anbietern beginnen und danach seine Suchkriterien auf die Informationen über die von ihm gewünschten Artikel verfeinern. Es ist aber ebenso möglich, die Recherche mit der Suche nach Informationen über einen Artikel, beispielsweise über spezielle Gartengeräte, zu starten und diejenigen Anbieter zu ermitteln, die diese Artikel anbieten und darüber Inhalt bereit halten. Ebenso kann der Nutzer Datumseingaben über einen von ihm gewünschten Zeitraum, zum Beispiel verkaufsoffene Sonntage oder gewisse Aktionszeiträume wie Winter- oder Sommerschlussverkäufe, vornehmen und sich die dazu passenden Inhalte über eine Vielzahl unterschiedlicher Anbieter und entsprechender Artikel anzeigen bzw. zugänglich machen lassen.

Fig. 22a zeigt ein weiteres Beispiel für eine Auswahlliste zum Erstellen eines virtuellen Einkaufszettels, bei der eine tabellarische Liste 187a aller gefundenen Informationen zu gesuchten Artikeln angezeigt wird. Diese Auswahlliste entspricht einem "virtuellen Briefkasten", der alle diejenigen Angebote, Artikel bzw. diesbezüglichen Informationen sammelt, die der Nutzer in den vorhergehenden Schritten durch die Festlegungen seiner Suchkriterien erhält. In dem hier gezeigten Beispiel werden dem Nutzer detaillierte Informationen zu den Artikeln "Jazz", "Schränke" und "Gartenbedarf" angezeigt. Der Artikel erscheint nun als Kategorie oder Oberbegriff 188a, die detaillierten Informationen sind darunter als konkret vorhandene Einzelposten 189a aufgelistet, die die jeweiligen Anbieter in ihren Angeboten haben und auf der Datenbank bereitstellen. Der Nutzer kann nun spezielle Angebote, Neuigkeiten, Raritäten und dergleichen abrufen, einen Preis 190a einsehen und den Namen des Anbieters 191a sowie dessen Ort 191b abrufen. Aus dieser Liste kann nun der Nutzer die für ihn interessanten einzelnen Artikel abrufen und in eine Einkaufsliste übertragen. Dies ist beispielsweise dadurch möglich, indem der Nutzer die ihn interessierenden Einzelposten in der Tabelle mit einem Mausklick markiert und anschließend einen "Übernehmen"-Knopf anklickt, bei dem die gewählten Posten in die virtuelle Einkaufsliste übertragen werden. In einem hier nicht dargestellten Fenster kann der Nutzer diese Einkaufsliste ansehen und gegebenenfalls nachträglich editieren. Ein Knopf 191d schließt das Fenster.

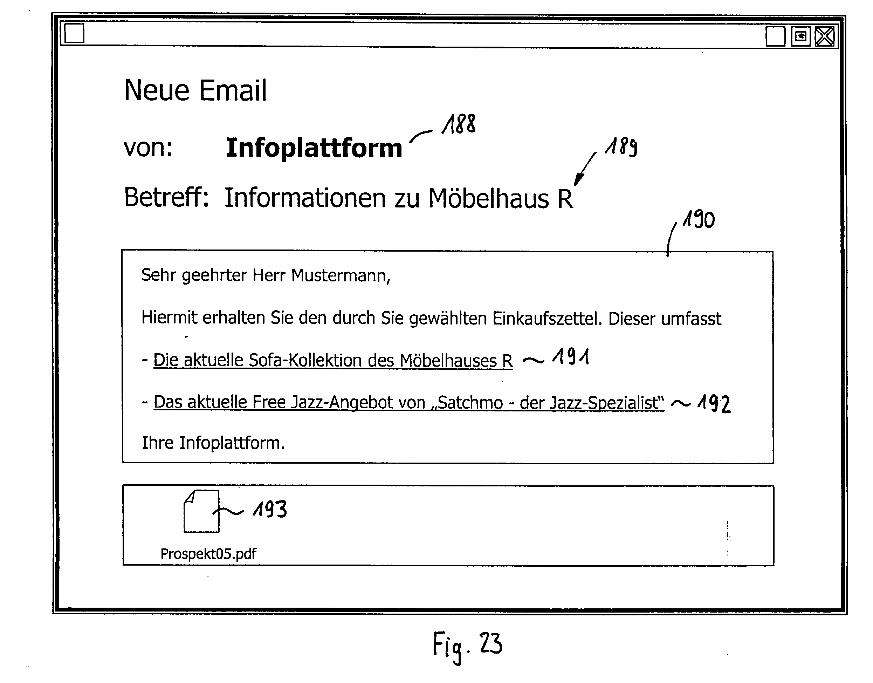

Die ausgewählten Inhalte werden dem Nutzer vorzugsweise über einen Link oder mehrere Links in einer Email zugänglich gemacht. Der Empfang und das Anzeigen der Email schließt neben der Anzeige und dem Abruf auf Personalcomputern ausdrücklich auch deren Anzeige auf Mobilfunkgeräten ein. Fig. 23 zeigt ein beispielhaftes Emailfenster. Zum Anzeigen des Emailfensters ist jedes Emailprogramm bzw. jeder Webbrowser geeignet. Bei Mobilfunkgeräten ist in diesem Zusammenhang eine WAP-Kompatibilität von Vorteil.

Die Emailadresse bzw. die Mobilfunknummer gibt der Nutzer wie beschrieben in einem der vorhergehend beschriebenen Fenster ein. Die an diese Adresse gesandte Email weist in einem Feld 188 den Absender der Email auf und gibt in einer Betreffzeile 189 einen eindeutigen Hinweis auf den Inhalt der Email. Im Textkörper 190 der Email erfolgt eine eindeutige Erläuterung des durch den Nutzer gewählten Inhalts. Der Zugriff auf die Inhalts wird mittels der Links 191 und 192 ermöglicht, über die der Nutzer die in der Datenbankstruktur gespeicherten Inhalte direkt ansprechen, abrufen und anzeigen kann.

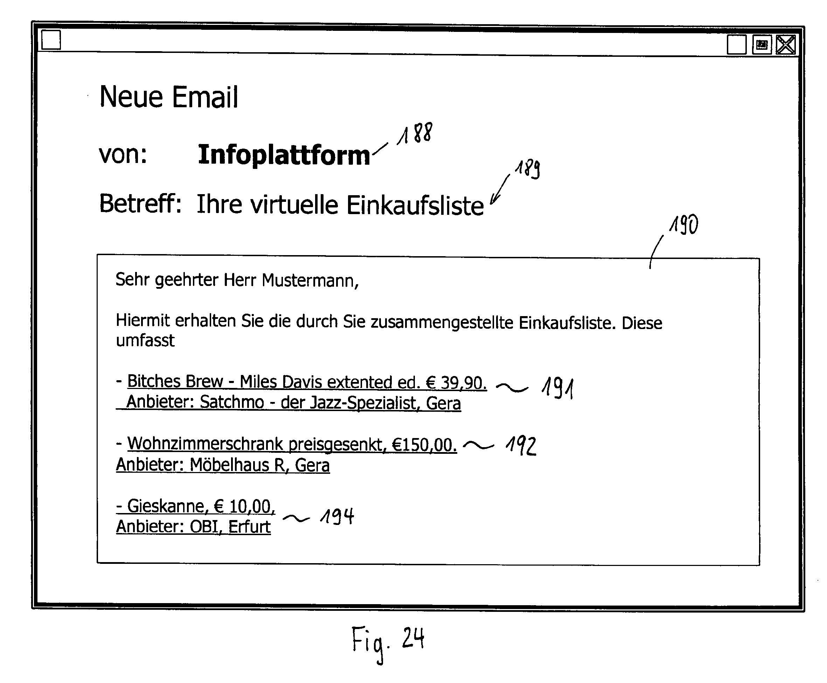

Fig. 24 zeigt eine weitere beispielhafte Email mit einem aus der Liste aus Fig. 22a erzeugten virtuellen Einkaufszettel. Die Email zeigt den virtuellen Einkaufszettel.

Anstelle der Email ist, wie bereits dargestellt, auch das Versenden und Emfangen einer SMS, MMS oder WAP-Nachricht möglich. Derartige Nachrichten können auch unabhängig von dem vorhergehend zusammengestellten Einkaufszettel versandt werden. So ist es beispielsweise möglich, aufgrund der innerhalb des Nutzeraccounts gespeicherten Daten ein Nutzerprofil zu erstellen und die genannten Nachrichten zu einer für den jeweiligen Nutzer angepassten Nachrichtensammlung nach Art eines elektronischen Magazins zusammen zu stellen und in einer geeigneten Form zu versenden.

Es ist abschließend festzustellen, dass das erfindungsgemäße Verfahren nicht auf die hier gezeigten Ausführungsbeispiele beschränkt ist, sondern im Rahmen fachmännischen Handelns zweckmäßig und vorteilhaft erweitert werden kann. Dies betrifft insbesondere das Aussehen und die Anordnung der vorhergehend schematisch dargestellten Fenster, der Menüs und der Fensterelemente. Diese Veränderungen können ausgeführt werden, ohne den erfindungsgemäßen Grundgedanken zu verlassen. Weitere Ausführungsformen ergeben sich auch aus den Unteransprüchen.

### Bezugszeichenliste

- 20: Anbieterendgerät
- 25: zentraler Datenbankserver
- 30: Nutzerendgerät
- 35: Email-Server
- 99: Mauszeiger
- 100: Link für Anbieterzugang
- 101: Link für Nutzerzugang
- 102: Aktivieren Anbieteraccount
- 103: Erstellen Anbieteraccount
- 104: Rückkehr HOME-Seite
- 105: Eingabemaske Login-Name
- 106: Eingabemaske Passwort
- 107: Abbruch Login-Vorgang
- 108: Verändern personelle Daten
- 109: Aufruf Übersichtsseite Inhaltupload
- 110: Aufruf Dateiübersicht
- 111: Aufruf Statistikseite
- 112: Logout
- 113: Eingabemaske Branche

- 114: Eingabemaske Name
- 115: Eingabemaske Anschrift
- 116: Texteingabe zur freien Verfügung
- 117: Aktivieren Inhaltübertragung
- 118: Aktivieren Inhaltaktualisierung
- 120: Aktivieren Inhaltlöschung
- 121: interaktive Kartendarstellung
- 123: Datumsspalte
- 124: Dateiupload
- 125: belegter Speicherplatz
- 126: gelöschte Inhalte
- 127: frei gewordener Speicherplatz
- 128: abgebrochene Transfers
- 129: Inhaltnamen
- 130: Beginn Einstellzeitraum
- 131: Ende Einstellzeitraum
- 132: Zugriffszahl, absolut
- 133: Detailaufruf
- 134: Aufruf Einzugsgebiet
- 135: Fenster schließen
- 136: Jahresauflistung, tabellarisch
- 137: Aufruf graphische Darstellung
- 138: Fenster schließen
- 139: graphische Darstellung
- 140: Kartendarstellung
- 141: Markierungspunkt
- 142: Anmelden bekannter Nutzeraccount
- 143: Einrichten neuer Nutzeraccount
- 144: Aktivieren Gastzugang
- 145: Fenster schließen, zurück zur Portalseite
- 146: Eingabemaske Nutzeraccountname
- 147: Eingabemaske Nutzerpaswort
- 148: Fenster schließen, abbrechen
- 149: Angabe Nutzername
- 150: Aktivieren weiterer Angaben
- 150a: Information letzter Login-Zeitpunkt
- 151: Anzeigen letzte Suchaktion
- 152: Präferenzen setzen/verändern
- 153: Aktivieren neue Suchaktionen
- 154: Seite schließen
- 155: Eingabe Straße
- 156: Eingabe Hausnummer
- 157: Eingabe Wohnort
- 158: Eingabe Postleitzahl
- 159: Eingabe email-Adresse
- 160: Schließen/Speichern
- 161: Auswahlmenü Branche
- 161a: Artikelauswahlmenü
- 161b: erste Unterverzweigung
- 161c: weitere Unterverzweigung
- 161d: höhere Auswahlebene
- 162: Auswahlmenü Bundesland
- 163: Auswahlmenü Stadt
- 164: Schließen/Speichern
- 165: Auswahlmenü Ort neu
- 166: Auswahlmenü Ortsbereich neu
- 167: Auswahlmenü Branche neu
- 168: Aktivieren interaktive Kartendarstellung
- 169: Übersichtskartenteil
- 170: Zoomkartenteil
- 171: Mauszeiger
- 172: Schließen/Speichern
- 173: Ausgabefenster Rechercheergebnisse
- 174: Eingabefenster Ort/Ortsbereich
- 175: Eingabefenster email-Adresse
- 176: Eingabe/Ausgabefenster Ort/Ortsbereich
- 177: Eingabe/Ausgabefenster Ort/Ortsbereich, Zoom
- 179: Ausgabeseite erster gefundener Anbieter
- 180: Ausgabeseite zweiter gefundener Anbieter
- 181: Inhaltauswahlmenü
- 182: Aktivierung
- 183: zweites Inhaltauswahlmenü
- 184: Aktivierung
- 185: Speichern virtueller Einkaufszettel
- 186: Aufruf Editieren Einkaufszettel
- 187: Schließen
- 187a: tabellarische Auflistung
- 188a: Oberbegriff
- 188: Absenderzeile
- 189: Betreffzeile
- 189a: Einzelposten
- 190: Textkörper
- 190a: Preis
- 191: erster Zugriffslink
- 191a: Anbieter
- 191b: Anbieterort
- 191c: Knopf "Übernehmen"
- 191d: Knopf "Zurück"
- 192: zweiter Zugriffslink
- 193: Email-Attachment
- 194: dritter Zugriffslink
- AF: Anforderungsformular
- AN: Anmeldeformular
- AP: Anbieterprofil
- BS: Bestätigungsseite
- cB: Ändern Nutzerdaten
- cBr: Ändern Branchen
- cPLZ: Ändern Postleitzahlen
- cZ: Ändern Zugangsdaten
- DB: Datenbank
- DBS: Datenbankstruktur
- INFO: Infoseite
- LL: Linkliste
- LOG: Login-Formular
- NP: Nutzerprofil
- PP: Präsentationsprogramm
- selArt: Artikelauswahl
- selB: Branchenauswahl
- selPLZ: Auswahl Postleitzahl
- sEZ: Anzeige virtueller Einkaufszettel
- sPB: Aufruf internes Infosystem
- STAT: Statistikseite
- sv PLZ: Speichern Postleitzahl
- svB: Bestätigung Branchenauswahl
- SvKD: Speichern Nutzerdaten
- UP: Uploadverwaltung/Ausführung
- USt: Startseite Nutzer
- V: Verwaltungsseite
- VS: Verwaltungsseite Anbieter
- WB: Webbrowser
- C: Inhalt

## Patentansprüche

1. Verfahren zur Daten verarbeitenden Informationsvermittlung zwischen einer Gesamtheit aus mindestens einem Anbieterendgerät (20) in bidirektionaler Kommunikation mit einem zentralen Datenbankserver (25) und einer Reihe von Nutzerendgeräten (30) in bidirektionaler Kommunikation mit dem zentralen Datenbankserver in einem Kommunikationsnetzwerk, insbesondere dem Internet und/oder einem Mobilfunknetz,
**gekennzeichnet durch**
folgende Verfahrensschritte:
- Erstellen mindestens eines Anbieteraccounts mit mindestens einem eindeutigen Anbieterprofil (AP1, AP2, AP3) auf einem zentralen Datenbanksystem (DBS) **durch** einen ersten Datentransfer zwischen dem mindestens einen Anbieterendgerät (20) und dem zentralen Datenbankserver (25) innerhalb des Kommunikationsnetzwerks,
- Erstellen mindestens eines Nutzeraccounts mit mindestens einem eindeutigen Nutzerprofil (NP1, NP2) auf dem zentralen Datenbanksystem (DBS) **durch** einen zweiten Datentransfer zwischen dem mindestens einen Nutzerendgerät (30) und dem zentralen Datenbankserver innerhalb des Kommunikationsnetzwerks,
- Übertragen mindestens eines anbieterspezifischen Contents (C) von dem mindestens einen Anbieterendgerät an den zentralen Datenbankserver,
- Aufbereitung, Selektierung und Kategorisierung des mindestens einen anbieterspezifischen Contents (C) auf dem Datenbankserver gemäß veränderbarer Daten des Anbieterprofils,
- Abgleich zwischen den Daten des mindestens einen Anbieterprofils und den Daten des mindestens einen Nutzerprofils anhand individuell gewählter Zuordnungsparameter und nutzerspezifischen Anforderungskriterien und Ermittlung eines Korrelationsgrades,
- Freigabe des mindestens einen anbieterspezifischen Contents (C) für das mindestens eine Nutzeraccount mit dem mindestens einen Nutzer bei einem hinreichend großen Korrelationsgrad entsprechend der Zuordnungsparameter und der Anforderungskriterien,
- Abruf des freigegebenen anbieterspezifischen Contents **durch** das mindestens eine Nutzerendgerät

2. Verfahren nach Anspruch 1,
**dadurch gekennzeichnet, dass**
das mindestens eine Anbieterprofil (AP1, AP2, AP3) mindestens Daten über einen geographischen Ort oder Ortsbereich des Anbieters, eine kategoriale Zuordnung des durch den Anbieter übertragenen Contents, personenbezogene Daten des Anbieters und statistische Daten über das mindestens eine anbieterspezifische Content enthält.

3. Verfahren nach Anspruch 1,
**dadurch gekennzeichnet, dass**
das mindestens eine Nutzerprofil (NP1, NP2) mindestens Daten über einen geographischen Ort oder Ortsbereich des Nutzers, eine kategoriale Zuordnung des durch den Nutzer angeforderten klassifizierten Contents, personenbezogene Daten des Nutzers und statistische Daten über das mindestens eine für den Nutzer freigegebene anbieterspezifische Content enthält.

4. Verfahren nach Anspruch 1 bis 3,
**dadurch gekennzeichnet, dass**
das mindestens eine Anbieterprofil (AP1, AP2, AP3) und das mindestens eine Nutzerprofil (NP1, NP2) in Form einer relationalen Datenbankstruktur, insbesondere eine SQL-Datenbankstruktur, auf dem zentralen Datenbankserver (25) gespeichert und verarbeitet werden.

5. Verfahren nach Anspruch 1 bis 4,
**dadurch gekennzeichnet, dass**
das Übertragen des mindestens einen anbieterspezifischen Contents (C) auf die Datenbankstruktur des zentralen Datenbankservers (25) und/oder das Freigeben des anbieterspezifischen Contents über eine XML-Schnittstelle (XML) erfolgt.

6. Verfahren nach einem der Ansprüche 1 bis 5,
**dadurch gekennzeichnet, dass**
die Freigabe des mindestens einen anbieterspezifischen Contents für das mindestens eine Nutzeraccount in Form einer von dem zentralen Datenbankserver (25) an das Nutzerendgerät (30) übertragenen Freigabeinformation, insbesondere in Form einer über Email übermittelten Linkliste (LL), erfolgt.

7. Verfahren nach einem der Ansprüche 1 bis 5,
**dadurch gekennzeichnet, dass**
die Freigabe des mindestens einen anbieterspezifischen Contents für das mindestens eine Nutzeraccount in Form einer von dem zentralen Datenbankserver (25) an das Nutzerendgerät (30) übertragenen Freigabeinformation in Form einer Mobilfunk-Kurznachricht (SMS) mit einer Freigabeinformation erfolgt.

8. Verfahren nach Anspruch 1 bis 7,
**dadurch gekennzeichnet, dass**
bei einem Aufruf des Anbieterprofils (AP1, AP2, AP3) die statistischen Daten über die Menge der freigegebenen anbieterspezifischen Contente (C) abrufbar sind.

9. Verfahren nach Anspruch 8,
**dadurch gekennzeichnet, dass**
das Abrufen der statistischen Daten des Anbieterprofils durch eine Visualisierung ausführbar ist, wobei eine Darstellung aller geographischen Orte oder Ortsbereiche aller die Contente anfordernden Nutzer gemäß deren Nutzerprofile in Form einer generierten Kartendarstellung (121) erfolgt.

10. Verfahren nach Anspruch 8,
**dadurch gekennzeichnet, dass**
das Abrufen der statistischen Daten des Anbieterprofils auf Anforderung durch eine Visualisierung ausführbar ist, wobei eine laufende Zählung über die Freigaben der vorhandenen anbieterspezifischen Contente mit einer Auflistung und/oder einer graphischen Darstellung (139) der gezählten Freigaben ausgeführt wird.

11. Verfahren nach Anspruch 1 bis 3,
**dadurch gekennzeichnet, dass**
der Zugriff auf das mindestens eine Anbieterprofil bzw. das mindestens eine Nutzerprofil durch eine Account-Verwaltung sicherheitswirksam, insbesondere durch eine anfängliche Verifizierung in Verbindung mit einer Passworteinrichtung und Passworterkennung, geschützt ist.

12. Verfahren nach Anspruch 1 bis 3,
**dadurch gekennzeichnet, dass**
zur Auswahl und/oder Veränderung der Daten des mindestens einen Anbieterprofils (AP1, AP2, AP3) bzw. des mindestens einen Nutzerprofils (NP1, NP2) Mittel für eine graphische Selektion aus einer Menge möglicher Anbieter- und/oder Nutzerdaten, insbesondere anklickbare topographische Karten und/oder Auswahlmenüs (161, 162, 163) zur Auswahl eines geographischen Ortes oder Ortsbereiches und/oder Auswahllisten aktivierbar sind.

13. Verfahren nach einem der vorhergehenden Ansprüche,
**dadurch gekennzeichnet, dass**
das mindestens eine Anbieterendgerät und das mindestens eine Nutzerendgerät ein internettaugliches Endgerät und das Kommunikationsnetzwerk das Internet ist.

14. Verfahren nach einem der vorhergehenden Ansprüche,
**dadurch gekennzeichnet, dass**
die Contente Bild-, Text- und/oder Multimediadaten, insbesondere Bild-, Dokumenten-, Präsentations-, Ton- und/oder Video-Dateiformate umfassen.
